# EUROPEAN PATENT SPECIFICATION

(11) **EP 3 354 545 B1**
(45) Date of publication and mention of the grant of the patent: **18.03.2020**
(21) Application number: 18153195.5
(22) Date of filing: 24.01.2018
(51) Int. Cl.: B62J 6/02, F21S 41/143, F21S 41/29, F21S 41/24, F21S 41/255, F21S 41/265, F21S 41/275, F21S 41/32, F21S 41/663, F21S 41/151, F21S 41/155, F21Y 103/10

(54) **LIGHT MODULE FOR VEHICLE HEADLIGHT**
LICHTMODUL FÜR FAHRZEUGSCHEINWERFER
MODULE D'ÉCLAIRAGE POUR PHARE DE VÉHICULE

(30) Priority: 25.01.2017 IN 201721002908
(43) Date of publication of application: 01.08.2018
(73) Proprietor: Yamaha Hatsudoki Kabushiki Kaisha, Iwata-shi Shizuoka 438-8501 (JP)
(72) Inventor: INOUE, Takehiro, Iwata-shi, Shizuoka 438-8501 (JP); CARLETTI, Tomas, 42015 Correggio Reggio Emilia (IT); MANNARI, Marco, 42015 Correggio Reggio Emilia (IT); DORAISAMY, Shanmugasundaram, Haryana 131029 (IN)
(74) Representative: Grünecker Patent- und Rechtsanwälte PartG mbB

(56) References cited:
- EP-A2- 2 357 398
- DE-A1-102011 112 285
- DE-U1-202013 101 509
- JP-A- 2016 035 834
- KR-A- 20150 068 117
- US-A1- 2014 092 619
- US-A1- 2016 290 583
- US-A1- 2016 341 386

## Description

### BACKGROUND OF THE INVENTION

### Field of the Invention

The present invention relates to a light module for a headlight of a vehicle, a headlight for a vehicle, and a vehicle.

### Description of the Related Art

Document US 2016/0341386 A1 discloses a light module of a headlight having the features according to the preamble of claim 1.

One type of light modules for headlights of a vehicle is a projector-type light module. The projector-type light module is disclosed in, for example, Japanese Patent Application Publication No. 2014-203513 (Patent Literature 1). In the projector-type light module, light from a light source is reflected by a reflector including a silver-colored reflection surface. A low beam is formed by the light reflected from the reflector.

For the light module that forms the low beam, there is a demand for reducing size while securing the spread and the illuminance in the left-right direction as required for the low beam.

### SUMMARY OF THE INVENTION

An object of the present invention is to provide a light module for a headlight of a vehicle, the size of which can be reduced while securing the spread and the illuminance in the left-right direction as required for a low beam and a headlight of a vehicle and a vehicle including the light module for the headlight of the vehicle.

The inventors examined whether the size could be reduced while securing light distribution (the spread and the illuminance in the left-right direction) as required for a low beam in a light module for a headlight of a vehicle.

The low beam has to spread in the left-right direction of the vehicle. Further, the illuminance of the low beam is desirably higher. In particular, high illuminance is requested in a center region under a cutoff line.

First, the inventors attempted to reduce the size of a reflector for low beam to secure the spread and the illuminance of the low beam in the left-right direction of the vehicle. However, it was difficult to realize the reflector for low beam that satisfies this condition. In particular, sufficient illuminance was hardly obtained.

The inventors further performed an examination for reducing size while securing the spread and the illuminance in the vehicle left-right direction of the low beam. As a result, the inventors have found these matters, as follows.

An inner lens for low beam is provided in a position between an outer lens and a light source and near the light source to substitute for the reflector for low beam. The inner lens for low beam is provided with two light distribution adjustment elements: a light-receiving surface having a function (a collimating function) for receiving light from the light source (a light emitting diode) and condensing or collimating a part of the light; and a reflector surface having a function (a reflecting function) for receiving and reflecting a part of the light received by the light-receiving surface and guiding the part of the light in a forward direction. The inventors have found that, by adopting the inner lens for low beam including the two light distribution adjustment elements (the collimating function and the reflecting function) instead of the reflector for low beam, it is possible to secure sufficient illuminance of the low beam in the light module and, in particular, the center can be brighter than the periphery in a light distribution region of the low beam. Further, the inventors have found that, by adopting the inner lens for low beam and an outer lens including an emission surface curved in a convex shape in the light module, it is possible to maintain the light distribution region of the low beam wide in the left-right direction while securing sufficient illuminance of the low beam and the size of the light module can be reduced.
(1) A light module for a headlight of a vehicle according to the present invention, which has been made on the basis of the above knowledge, includes configurations according to claim 1.
   By combining the configurations explained in claim 1 at the same time, the light module of the present invention can maintain light distribution (the spread and the variation of the illuminance in the vehicle left-right direction) as required for the low beam while the size reduction can be realized.
   Note that the light module described in (1) above includes at least one light emitting diode for low beam. In other words, the light module includes a light module including a plurality of light emitting diodes for low beam.
(2) According to another aspect, the light module for the headlight of the vehicle of the present invention includes one light emitting diode for low beam or a plurality of light emitting diodes for low beam arrayed in the left-right direction of the light module. The width in the left-right direction of the light module of one or more light emitting surfaces of the one or more light emitting diodes for low beam is larger than the width in the up-down direction of the light module of the one or more light emitting surfaces of the one or more light emitting diodes for low beam.

Note that, when the light module includes the plurality of light emitting diodes for low beam, if a plurality of light emitting surfaces is arrayed, the width in the left-right direction of the light module of the light emitting surface refers to the distance between the left-most end of the light emitting surface located at the left-most end and the right-most end of the light emitting surface located at the right-most end. If the plurality of light emitting surfaces is arrayed, the width in the up-down direction of the light module of the light emitting surface refers to the distance between the uppermost end of the plurality of light emitting surfaces and the lowermost end of the plurality of light emitting surfaces.

In this case, it is easy to form light distribution of the low beam having the spread in the left-right direction. Further, the illuminance in the center region of the light distribution of the low beam can be higher than the illuminance in left and right regions for creating illuminance variation (illuminance unevenness).
(3) According to another aspect, in the light module for the headlight of the vehicle of the present invention, the inner lens for low beam includes a plurality of light emitting diodes for low beam arrayed in the left-right direction when viewed in the horizontal cross-section through the light emitting surface of the light emitting diode for low beam.
   The inner lens for low beam includes a plurality of light-receiving surfaces and a plurality of reflector surfaces.
   The plurality of light-receiving surfaces is arrayed in the left-right direction of the light module. The light-receiving surfaces are located in front of the light emitting diodes for low beam.
   The plurality of reflector surfaces is arrayed in the left-right direction of the light module. The left reflector surface sections in the reflector surfaces are located on the left of the light-receiving surfaces. The right reflector surface sections in the reflector surfaces are located on the right of the light-receiving surfaces.
   The first emission surface is located in front of the plurality of light-receiving surfaces and the plurality of reflector surfaces and emits the first light received by the plurality of light-receiving surfaces.
   The outer lens receives the first light emitted from the first emission surface and emits the first light from the second emission surface curved in the convex shape.
   In this case, the plurality of light emitting diodes for low beam, the plurality of light-receiving surfaces, and the plurality of reflector surfaces are arrayed in the left-right direction of the light module. Therefore, it is possible to further expand the light distribution of the low beam in the vehicle left-right direction. Further, the illuminance can be higher in the light distribution region in the vehicle left-right direction of the low beam (in particular, the illuminance of the center portion).
(4) According to another aspect, in the light module for the headlight of the vehicle of the present invention, when viewed in the horizontal cross-section through the light emitting surface of the light emitting diode for low beam, at least one of the plurality of light emitting diodes for low beam is located on the left side of the center line of the outer lens and at least one of the plurality of light emitting diodes for low beam is located on the right side of the center line of the outer lens in the left-right direction of the light module.
   At least one of the plurality of light-receiving surfaces is located on the left side of the center line of the outer lens and at least one of the plurality of light-receiving surfaces is located on the right side of the center line of the outer lens in the left-right direction of the light module.
   At least one of the plurality of reflector surfaces is located on the left side of the center line of the outer lens and at least one of the plurality of reflector surfaces is located on the right side of the center line of the outer lens in the left-right direction of the light module.
   In this case, when viewed in the horizontal cross-section through the center of the light emitting diode for low beam, the illuminance of the low beam on the left side of the center line of the outer lens can be matched to the illuminance of the low beam on the right side of the center line of the outer lens to a certain degree.
(5) According to another aspect, the light module for the headlight of the vehicle of the present invention, when viewed in the horizontal cross-section through the light emitting surface of the light emitting diode for low beam, the number of the light emitting diodes for low beam located on the left side of the center line of the outer lens is equal to the number of the light emitting diodes for low beam located on the right side of the center line of the outer lens in the left-right direction of the light module. The number of the light-receiving surfaces located on the left side of the center line of the outer lens is equal to the number of the light-receiving surfaces located on the right side of the center line of the outer lens in the left-right direction of the light module. The number of the reflector surfaces located on the left side of the center line of the outer lens is equal to the number of the reflector surfaces located on the right side of the center line of the outer lens in the left-right direction of the light module.
   In this case, when viewed in the horizontal cross-section through the light emitting surface of the light emitting diode for low beam, the illuminance of the low beam on the left side of the center line of the outer lens can more uniformly be matched to the illuminance of the low beam on the right side of the center line of the outer lens in the left-right direction of the light module.
(6) According to another aspect, in the light module for the headlight of the vehicle of the present invention, when viewed in the horizontal cross-section through the light emitting surface of the light emitting diode for low beam, the plurality of light emitting diodes for low beam is located in positions symmetrical with respect to the center line of the outer lens. The plurality of light-receiving surfaces is located in positions symmetrical with respect to the center line of the outer lens. The plurality of reflector surfaces is located in positions symmetrical with respect to the center line of the outer lens.
   In this case, when viewed in the horizontal cross-section through the light emitting surface of the light emitting diode for low beam, the illuminance of the low beam on the left side of the center line of the outer lens can more uniformly be matched to the illuminance of the low beam on the right side of the center line of the outer lens in the left-right direction of the light module.
(7) According to another aspect, in the light module for the headlight of the vehicle of the present invention, when viewed in the horizontal cross-section through the light emitting surface of the light emitting diode for low beam, one of the front end of the left reflector surface section and the front end of the right reflector surface section of the reflector surface is located in front of the other in the front-rear direction of the light module.
(8) According to another aspect, in the light module for the headlight of the vehicle of the present invention, when viewed in the horizontal cross-section through the light emitting surface of the light emitting diode for low beam, the shape of the circumferential surface section of the light-receiving surface is symmetrical with respect to the normal through the center of the convex bottom surface section. Further, when viewed in a vertical cross-section through the center of the light emitting diode for low beam, the shape of the circumferential surface section of the light-receiving surface is asymmetrical with respect to the normal through the center of the convex bottom surface section.
   In this case, when viewed in the vertical cross-section through the light emitting surface of the light emitting diode for low beam, even if the inner lens for low beam is offset from the center line of the outer lens, obliquely front light from the light emitting diode for low beam can be directed downward to form the low beam while keeping the spread of the light distribution region in the left-right direction substantially equal on the left and right.
(9) According to another aspect, in the light module for the headlight of the vehicle of the present invention, when viewed in a vertical cross-section through the light emitting surface of the light emitting diode for low beam, the center of the convex bottom surface section of the light-receiving surface is offset from the center line of the outer lens.
   In this case, by locating the convex bottom surface section to deviate from the center line of the outer lens, a space can be provided near the center line of the outer lens in the light module, in which functions can be provided other than the inner lens for low beam in the space. Therefore, design flexibility of the light module improves and the size reduction of the light module can be facilitated.
(10) According to another aspect, in the light module for the headlight of the vehicle of the present invention, when viewed in a vertical cross-section through the light emitting surface of the light emitting diode for low beam, the normal of the center of the convex bottom surface section of the light-receiving surface tilts with respect to the center line of the outer lens and a point in front of the convex bottom surface section in the normal is located below a point behind the convex bottom surface section in the normal.
   In this case, it is easy for the inner lens to form the low beam.
(11) According to another aspect, in the light module for the headlight of the vehicle of the present invention, when viewed in a vertical cross-section through the light emitting surface of the light emitting diode for low beam, the reflector surface includes an upper reflector surface section located above the convex bottom surface section, the upper reflector surface section reflecting the first light received by the light-receiving surface, and a lower reflector surface section located below the convex bottom surface section, the lower reflector surface section reflecting the first light received by the light-receiving surface. The front end of the upper reflector surface section is located in front of the front end of the lower reflector surface section in the front-rear direction of the light module.
   In this case, a reflection area of the upper reflector surface section is larger than a reflection area of the lower reflector surface section. Therefore, most of the first light reflected on the upper reflector surface section travels in an oblique front downward direction and forms the low beam.
(12) In the light module for the headlight of the vehicle of the present invention, when viewed in the horizontal cross-section through the light emitting surface of the light emitting diode for low beam, the first emission surface includes a left first emission surface section located on the left side of the center line of the outer lens, the left first emission surface section refracting and emitting, rightward in the front-rear direction of the light module, the first light received from the light-receiving surface and the reflector surface, and a right first emission surface section located on the right side of the center line of the outer lens, the right first emission surface section refracting and emitting, leftward in the front-rear direction of the light module, the first light received from the light-receiving surface and the reflector surface.
   Thereby, the first emission surface condenses once the emitted first light in front of the first emission surface and thereafter diffuses the first light in the left-right direction. Therefore, it is possible to form the low beam having a wide light distribution region in the left-right direction.
(13) According to another aspect, in the light module for the headlight of the vehicle of the present invention, when viewed in the horizontal cross-section through the light emitting surface of the light emitting diode for low beam, the left first emission surface section and the right first emission surface section are located symmetrically with respect to the center line of the outer lens.
   In this case, when viewed in the horizontal cross-section through the light emitting surface of the light emitting diode for low beam, the illuminance of the low beam on the left side of the center line of the outer lens can substantially uniformly be matched to the illuminance of the low beam on the right side of the center line of the outer lens in the left-right direction of the light module.
(14) According to another aspect, in the light module for the headlight of the vehicle of the present invention, when viewed in a vertical cross-section through the center of the light emitting diode for low beam, the upper end of the first emission surface is located in front of the lower end of the first emission surface in the front-rear direction of the light module.
   In this case, when viewed in the vertical cross-section through the light emitting surface of the light emitting diode for low beam, the first emission surface is easily directed obliquely front downwards. Therefore, it is easy to form the low beam using the inner lens for low beam and the outer lens.
(15) In the light module for the headlight of the vehicle of the present invention, when viewed in a vertical cross-section through the light emitting surface of the light emitting diode for low beam, the first emission surface is curved in a concave shape.
   Thereby, the emitted light of the first emission surface of the inner lens for low beam is emitted to a portion near the cutoff line of the low beam. Therefore, the illuminance can be increased in the portion near the cutoff line of the low beam.
(16) According to another aspect, in the light module for the headlight of the vehicle of the present invention, when viewed in the horizontal cross-section through the light emitting surface of the light emitting diode for low beam, the first emission surface includes a plurality of convex sections arrayed in the left-right direction of the light module.
   In this case, the light from the light emitting diode for low beam is scattered by the plurality of convex sections and emitted. Therefore, it is possible to blur the contour of the light distribution region of the low beam.
(17) According to another aspect, in the light module for the headlight of the vehicle of the present invention, when viewed in a vertical cross-section through the light emitting surface of the light emitting diode for low beam, the light module further includes a light emitting diode for high beam that emits second light in a forward direction and a reflector for high beam that receives the second light from the second light emitting diode and reflects the second beam. The outer lens receives the second light guided by the reflector for high beam and emits the second light as light for high beam.
   In this case, in the light module, the inner lens is used for formation of the light for low beam and the outer lens is used for formation of the light for high beam. Therefore, the size of the light module can be reduced.
(18) According to another aspect, in the light module for the headlight of the vehicle of the present invention, when viewed in the vertical cross section through the light emitting surface of the light emitting diode for low beam, the light emitting diode for high beam is located behind the light emitting diode for low beam in the front-rear direction of the light module.
   In this case, the size of the light module can be reduced.
(19) A headlight for a vehicle of the present invention includes the light module described in any one of (1) to (18).
(20) A vehicle of the present invention includes the headlight described in (19).

### BRIEF DESCRIPTION OF THE DRAWINGS

FIG. 1 is a front view of a motorcycle according to an embodiment;
FIG. 2 is a sectional view of the vicinity of a headlight of the motorcycle shown in FIG. 1;
FIG. 3 is a perspective view of a light module shown in FIG. 2;
FIG. 4 is a sectional view of the light module when viewed in a horizontal cross-section through the center of light emitting diodes for low beam;
FIG. 5 is a sectional view of the light module when viewed in a vertical cross-section through the center of the light emitting diode for low beam;
FIG. 6 is a perspective view of a configuration near the light emitting diode for low beam and a light emitting diode for high beam in the light module shown in FIG. 5;
FIG. 7 is a perspective view of an inner lens for low beam shown in FIG. 4 viewed obliquely from the upper left front;
FIG. 8 is a left side view of the inner lens for low beam in FIG. 4;
FIG. 9 is a perspective view of the inner lens for low beam in FIG. 4 viewed obliquely from the lower left front;
FIG. 10 is a rear view of the inner lens for low beam in FIG. 4;
FIG. 11 is a perspective view of the inner lens for low beam in FIG. 4 viewed obliquely from the lower right rear;
FIG. 12 is a perspective view of the inner lens for low beam in FIG. 4 viewed obliquely from the upper right rear;
FIG. 13 is an enlarged view of a part of the inner lens for low beam shown in FIG. 4;
FIG. 14 is an enlarged view of the inner lens for low beam shown in FIG. 4;
FIG. 15 is a schematic diagram showing an optical path of the light module when viewed in the horizontal cross-section through the center of the light emitting diodes for low beam;
FIG. 16 is an enlarged view of a portion near the inner lens for low beam in FIG. 15;
FIG. 17 is a comparative diagram of front-rear direction lengths when viewed in the vertical cross-section of the light module in the embodiment and a projector-type light module including a reflector for low beam and a reflector for high beam;
FIG. 18 is an enlarged view of the inner lens for low beam shown in FIG. 5;
FIG. 19 is a schematic diagram showing an optical path in the light module when viewed in the vertical cross-section through the center of the light emitting diode for low beam;
FIG. 20 is an enlarged view of a portion near the inner lens in FIG. 19;
FIG. 21 is a partially enlarged view of the vicinity of an emission surface of the inner lens in FIG. 16;
FIG. 22 is a horizontal sectional view of another light module having a shape different from the shape of the inner lens for low beam in FIG. 4;
FIG. 23 is a sectional view of another light module when viewed in the horizontal cross-section through the center of the light emitting diode for low beam different from the light modules shown in FIGS. 4 and 22;
FIG. 24 is a sectional view of another light module when viewed in the horizontal cross-section through the center of the light emitting diodes for low beam different from the light modules shown in FIGS. 4, 22, and 23;
FIG. 25 is a sectional view of another light module when viewed in the horizontal cross-section through the center of the light emitting diodes for low beam different from the light modules shown in FIGS. 4 and 22 to 24;
FIG. 26 is a perspective view of the light emitting diode for low beam shown in FIG. 23;
FIG. 27 is a perspective view of another light emitting diode for low beam different from the light emitting diode for low beam shown in FIG. 26;
FIG. 28 is a perspective view of a plurality of light emitting diodes for low beam mounted on the light module shown in FIG. 4; and
FIG. 29 is a vertical sectional view of another light module different from the light modules shown in FIGS. 4 and 22 to 25.

### DETAILED DESCRIPTION OF THE PREFERRED EMBODIMENTS

An embodiment of the present invention is explained in detail below with reference to the drawings. In the figures, the same or equivalent portions are denoted by the same reference numerals and signs, and explanation of the portions is not repeated.

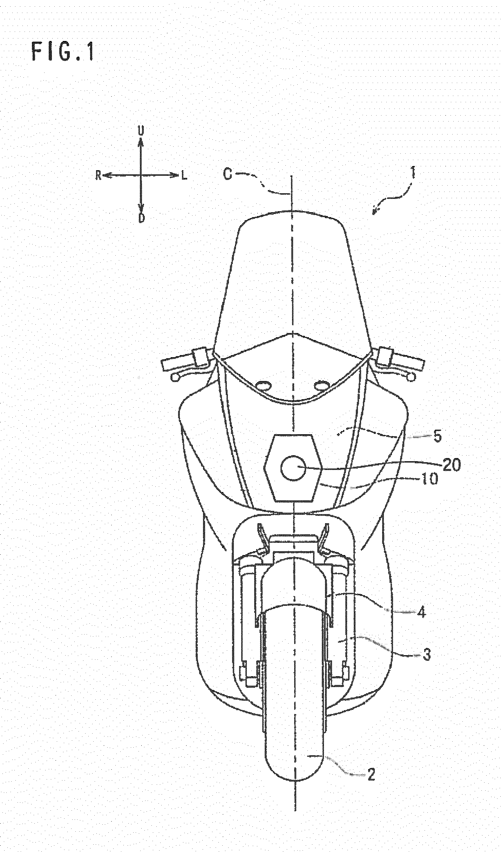

FIG. 1 is a front view of a motorcycle 1, which is an example of a "vehicle". The "vehicle" is not limited to the motorcycle 1. The "vehicle" may be, for example, an ATV (All Terrain Vehicle), an ROV (Recreational Off-highway Vehicle), or an automobile. The "vehicle" may be a tilting vehicle that turns in a leaning position. The tilting vehicle leans (tilts) to a curve inner side and turns during curve traveling. The tilting vehicle is not particularly limited. For example, the tilting vehicle may be a saddle-riding type vehicle such as a motorcycle or a motor tricycle. The motorcycle 1 in this embodiment is an example of the tilting vehicle.

In the following explanation, unless specifically noted otherwise, front, rear, left, right, upward, and downward of the vehicle respectively refers to front, rear, left, right, upward, and downward viewed from a rider riding on the motorcycle 1. An arrow F in the figures indicates a front direction of the vehicle. An arrow B indicates a rear direction of the vehicle. An arrow L indicates a left direction of the vehicle. An arrow R indicates a right direction of the vehicle. An arrow U indicates an upward direction of the vehicle. An arrow D indicates a downward direction of the vehicle.

Referring to FIG. 1, the motorcycle 1 includes a front wheel 2, a rear wheel (not shown in the figure), and a power unit (not shown in the figure) that drives the rear wheel. The front wheel 2 is supported by a pair of front forks 3. A front fender 4 is located above the front wheel 2. A front cowl 5 is located above the front fender 4. The front cowl 5 is located in front of a not-shown head pipe.

A headlight 10 for a vehicle is attached to the front cowl 5. However, a type of member to which the headlight 10 is attached is not particularly limited. For example, the headlight 10 may be attached to a bracket supported by a vehicle body frame.

The headlight 10 is a headlamp that radiates the front of the motorcycle 1. The headlight 10 includes a light module 20. The light module 20 is a light module including one or more light emitting diodes (LEDs) as a light source. Front, rear, left, right, upward, and downward in the following explanation concerning the light module 20 are defined to match a direction in which a center line (an optical axis) X of the outer lens 21 explained below extends. The left-right direction and the up-down direction of the light module 20 are defined to be orthogonal to each other on a plane orthogonal to the center line X of the outer lens 21 of the light module 20.

"Horizontal" in the explanation concerning the light module 20 refers to a direction parallel left-right direction of the light module 20. "Vertical" in the explanation concerning the light module 20 refers to a direction parallel to the up-down direction of the light module 20. In this embodiment, the front-rear direction, the left-right direction, and the up-down direction of the light module 20 respectively substantially match the front-rear direction, the left-right direction, and the up-down direction of the motorcycle 1. Therefore, in the following explanation concerning the light module 20, front, rear, left, right, upward, and downward mean front, rear, left, right, upward, and downward viewed from the rider of the motorcycle 1.

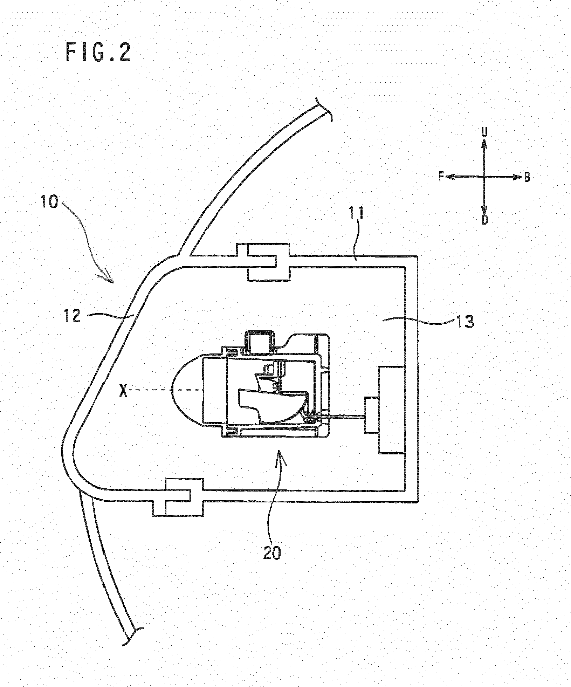

FIG. 2 is a vertical sectional view (a vertical sectional view in the front-rear direction of the motorcycle 1) including the center line X of the outer lens 21 of the light module 20 of a region near the headlight 10 in FIG. 1.

Referring to FIG. 2, the headlight 10 includes a housing 11 and an outer cover 12. The housing 11 supports the light module 20. The housing 11 may directly support the light module 20 or may indirectly support the light module 20 via another member. The housing 11 includes an opening in the front. The outer cover 12 is attached to the front surface of the housing 11 and covers the opening of the housing 11. A headlight chamber 13 is formed by the housing 11 and the outer cover 12. The light module 20 is located in the headlight chamber 13.

### [Light Module 20]

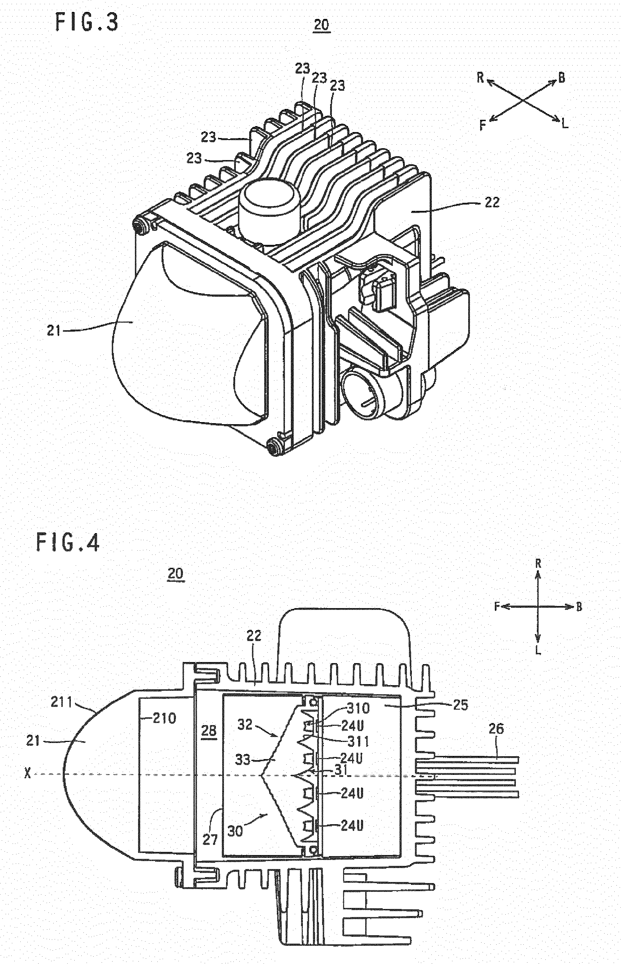

FIG. 3 is a perspective view of the light module 20 in FIG. 2. The light module 20 includes the outer lens 21 and a housing 22. The housing 22 is a housing including an opening in the front. The housing 22 includes a plurality of fins 23 for cooling on the outside. The outer lens 21 is attached to the front surface of the housing 22 and covers the opening of the housing 22.

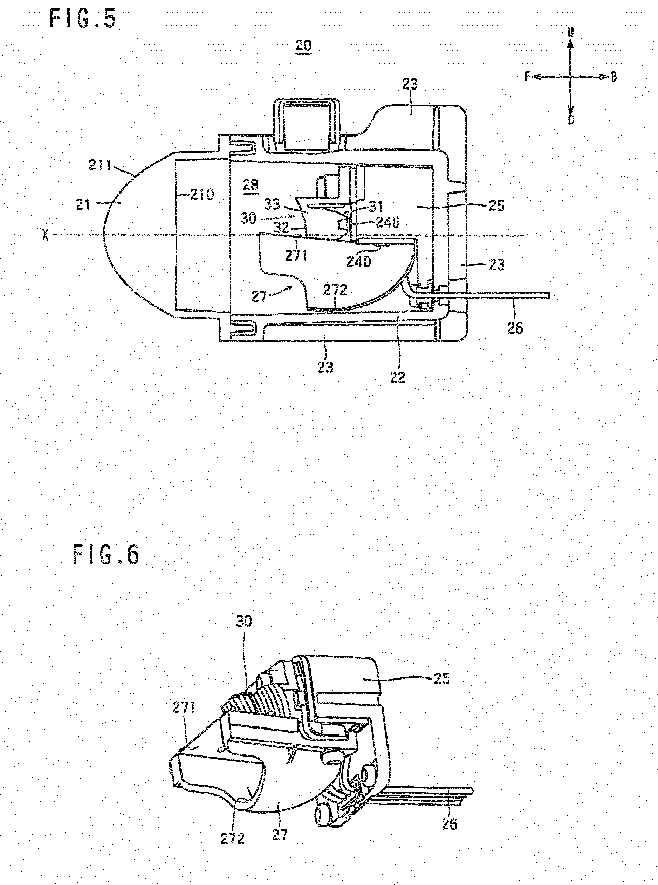

FIG. 4 is a horizontal sectional view of the light module 20 when viewed in a horizontal cross-section through the center of a plurality of light emitting diodes for low beam 24U. FIG. 5 is a vertical sectional view of the light module 20 when viewed in a vertical cross-section through a light emitting surface of the light emitting diode for low beam 24U.

Referring to FIGS. 4 and 5, as explained above, the outer lens 21 is attached to the front of the housing 22 to cover the opening. A housing chamber 28 is formed inside the light module 20 by the outer lens 21 and the housing 22. The light module 20 includes, in the housing chamber 28, the light emitting diodes for low beam 24U, a light emitting diode for high beam 24D, a heat sink 25, wires 26, a reflector for high beam 27, and an inner lens for low beam 30.

The plurality of light emitting diodes for low beam 24U emits light for forming a low beam (a dipped-light headlamp). In this example, the plurality of light emitting diodes for low beam 24U is arrayed in the left-right direction (the horizontal direction) of the light module 20. In this example, the light emitting diodes for low beam 24U are located above the center line X of the outer lens 21 and emit light for low beam forward.

The light emitting diode for high beam 24D forms a high beam (a headlight for traveling). In this example, the light emitting diode for high beam 24D is located below the center line X of the outer lens 21 and radiates the light downward. The light from the light emitting diode for high beam 24D is reflected on the reflector for high beam 27 and guided to above the center line X. In this example, the light emitting diode for high beam 24D is located below the light emitting diodes for low beam 24U.

The heat sink 25 is located in a rear part of the housing 22. The rear surface of the heat sink 25 is in contact with the rear surface of the housing chamber 28. The upper surface of the heat sink 25 is in contact with the upper surface of the housing chamber 28. Both the side surfaces (the left side surface and the right side surface) of the heat sink 25 are respectively in contact with both the side surfaces (the left side surface and the right side surface) of the housing chamber 28. The light emitting diodes for low beam 24U and the light emitting diode for high beam 24D are attached to the heat sink 25 via a board. Specifically, the plurality of light emitting diodes for low beam 24U is attached to the front surface of the heat sink 25. The light emitting diode for high beam 24D is attached to the lower surface of the heat sink 25. The heat sink 25 removes heat emitted by the light emitting diodes for low beam 24U and the light emitting diode for high beam 24D and discharges the heat to the outside via the fins 23.

The reflector for high beam 27 receives light from the light emitting diode for high beam 24D, reflects the light, and guides the light to the outer lens 21 as the light for high beam. FIG. 6 is a perspective view of a configuration around the reflector for high beam 27. Referring to FIGS. 4 to 6, the reflector for high beam 27 includes a ceiling plate 271 and a reflection bottom plate 272. The shape of the reflection bottom plate 272 when viewed in the vertical cross-section including the center line X is a quarter elliptical arcuate shape. The shape of the reflection bottom plate 272 when viewed in the vertical cross-section perpendicular to the center line X of the reflection bottom plate 272 is a half elliptical arcuate shape. The center portion of the reflection bottom plate 272 is located in the bottom and both the end portions of the reflection bottom plate 272 are located at the top. The ceiling plate 271 is located above a front part of the reflection bottom plate 272. The light emitting diode for high beam 24D is located above a rear part of the reflection bottom plate 272. A light emitting surface of the light emitting diode for high beam 24D is directed downward. The light emitting diode for high beam 24D emits the light downward.

### [Inner lens for low beam 30]

Referring to FIGS. 4 and 5, the inner lens for low beam 30 is located in front of the light emitting diodes for low beam 24U. At least a part of the inner lens for low beam 30 is located above the reflector for high beam 27. In FIG. 5, the inner lens for low beam 30 is located on the ceiling plate 271. As shown in FIG. 5, when viewed in a vertical cross-section through the center of the light emitting diode for low beam 24U, at least a part of the inner lens for low beam 30 is located above the center line X of the outer lens 21. The inner lens for low beam 30 receives light from light emitting surfaces of the light emitting diodes for low beam 24U, condenses and reflects the light, and emits the light for low beam toward the outer lens 21.

The inner lens for low beam 30 includes a rear surface 31, an emission surface 32, and a light guide section 33. The rear surface 31 is located in front of the plurality of light emitting diodes for low beam 24U. The rear surface 31 receives the light emitted from the light emitting surfaces of the plurality of light emitting diodes for low beam 24U and collimates (condenses) or reflects a part of the light. The emission surface 32 receives the light from the rear surface 31 and emits the light to the outside as the light for low beam. The light guide section 33 is located between the rear surface 31 and the emission surface 32 and guides the light received and collimated or reflected by the rear surface 31 to the emission surface 32.

The inner lens for low beam 30 is transparent. For example, the material of the inner lens for low beam 30 (including the light guide section 33, the emission surface 32, and the rear surface 31) may be glass or may be resin. The material of the inner lens for low beam 30 is not limited to glass or resin and only has to be a material that is transparent.

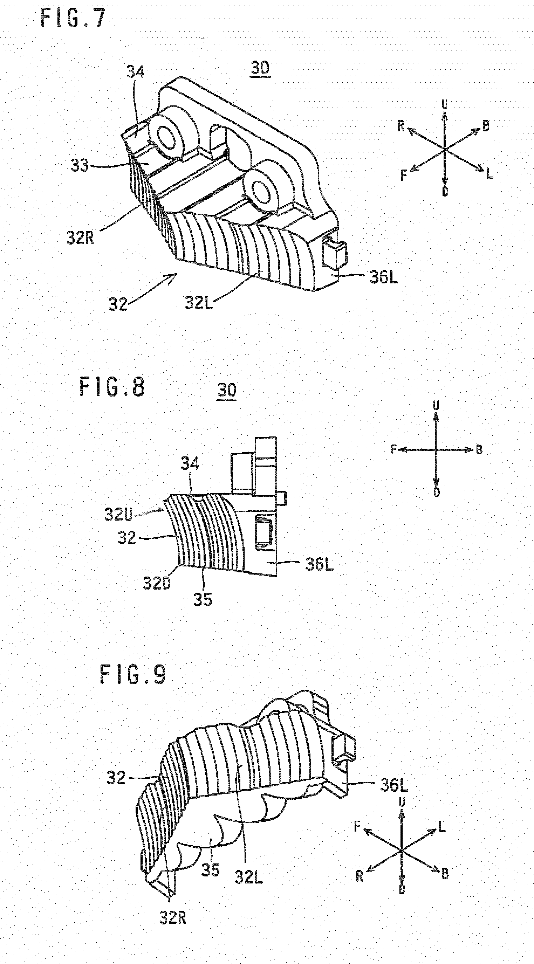

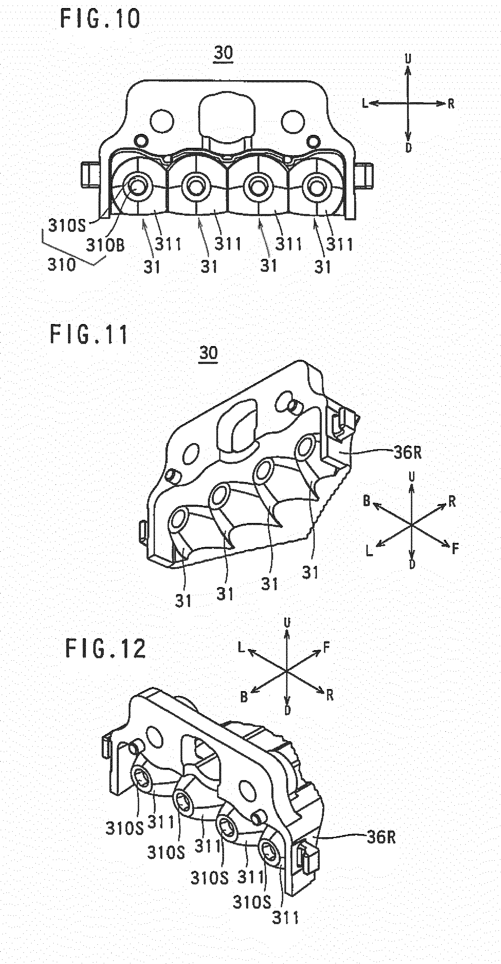

FIG. 7 is a perspective view of the inner lens for low beam 30 viewed obliquely from the upper left front. FIG. 8 is a left side view of the inner lens for low beam 30. FIG. 9 is a perspective view of the inner lens for low beam 30 viewed obliquely from the lower left front. FIG. 10 is a rear view of the inner lens for low beam 30. FIG. 11 is a perspective view of the inner lens for low beam 30 viewed obliquely from the lower right rear. FIG. 12 is a perspective view of the inner lens for low beam 30 viewed obliquely from the upper right rear.

Referring to FIGS. 4, 5, and 7 to 12, the rear surface 31 of the inner lens for low beam 30 includes a plurality of light-receiving surfaces 310 and a plurality of reflector surfaces 311. The emission surface 32 is equivalent to the front surface of the inner lens for low beam 30. The light guide section 33 is located between the emission surface 32 and the rear surface 31. In the light guide section 33, besides the emission surface 32 and the rear surface 31, an upper surface 34, a lower surface 35, a left side surface 36L, and a right side surface 36R are located. The upper surface 34 and the lower surface 35 are connected via the left and right side surfaces 36L and 36R. The upper surface 34, the lower surface 35, and the left and right side surfaces 36L and 36R form the circumferential surface of the inner lens for low beam 30. The circumferential surface is connected to the emission surface 32 and the rear surface 31.

### [Light-receiving surfaces 310]

Referring to FIGS. 4, 5, and 10 to 12, the plurality of light-receiving surfaces 310 is arrayed in the left-right direction of the light module 20 when viewed in the horizontal cross-section through the center of the light emitting diodes for low beam 24U (see FIG. 4). The light-receiving surfaces 310 are located in front of the light emitting diodes for low beam 24U in the front-rear direction of the light module 20.

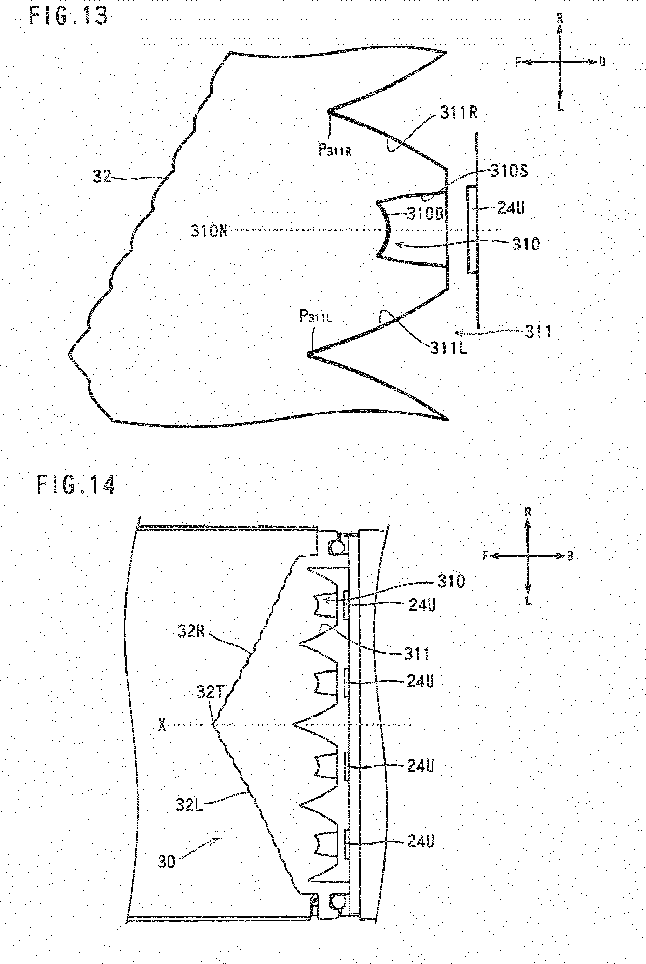

FIG. 13 is an enlarged view of the inner lens for low beam 30 in a portion near the light-receiving surface 310 when viewed in a horizontal cross-section through the light emitting surface of the light emitting diode for low beam 24U.

Referring to FIGS. 10 to 13, the light-receiving surface 310 has a concave shape recessed forward. The light-receiving surface 310 includes a convex bottom surface section 310B and a circumferential surface section 310S. The convex bottom surface section 310B is located in front of the light emitting diode for low beam 24U.

In FIG. 13, the convex bottom surface section 310B has a shape curved in a convex shape centrally projecting in a backward direction. The circumferential surface section 310S is cylindrical and is connected to a circumferential edge of the convex bottom surface section 310B at the front end. As shown in FIG. 13, when viewed in the horizontal cross-section through the light emitting surface of the light emitting diode for low beam 24U, the width of the circumferential surface section 310S gradually decreases from the rear toward the front.

### [Reflector surfaces 311]

When viewed in the horizontal cross-section through the center of the light emitting diode for low beam 24U (FIG. 13), the plurality of reflector surfaces 311 are arrayed in the left-right direction of the light module 20. The light-receiving surface 310 is located in the center of each of the reflector surfaces 311. Referring to FIGS. 4, 5, and 10 to 13, the reflector surfaces 311 have a tapered shape, the width of which gradually decreases from the front toward the rear of the light module 20.

Referring to FIG. 13, each of the reflector surfaces 311 includes a left reflector surface section 311L and a right reflector surface section 311R. In FIG. 13, the left reflector surface section 311L is located on the left of the light-receiving surface 310. The left reflector surface section 311L reflects light received by (the circumferential surface section 310S of) the light-receiving surface 310 and guides the light to the emission surface 32. The right reflector surface section 311R is located on the right of the light-receiving surface 310. The right reflector surface section 311R reflects the light received by (the circumferential surface section 310S of) the light-receiving surface 310 and guides the light to the emission surface 32.

The rear ends of the left reflector surface section 311L and the right reflector surface section 311R are connected to the rear end of the light-receiving surface 310. Further, the reflector surfaces 311 adjacent to each other are connected at the front end edges.

### [Functions of the light-receiving surface 310 and the reflector surface 311]

The light-receiving surface 310 receives, in the convex bottom surface section 310B and the circumferential surface section 310S, light from the light emitting surface of the light emitting diode for low beam 24U. As explained above, the convex bottom surface section 310B has the convex shape projecting in a backward direction. Therefore, the convex bottom surface section 310B collimates (condenses) the received light. In other words, the light-receiving surface 310 has a collimating function for collimating a part of the received light and guiding the light forward. The collimated light travels forward in the light guide section 33. On the other hand, the circumferential surface section 310S in the light-receiving surface 310 refracts the received light and guides the light to the reflector surface 311.

The reflector surface 311 receives the light received by the circumferential surface section 310S, reflects the lights and guides the light forward. In this example, the reflector surface 311 reflects the received light and guides the light forward as collimated light. In other words, the reflector surface 311 has a reflecting function for reflecting light to thereby guide the light forward.

In this way, the inner lens for low beam 30 according to this embodiment guides the light from the light emitting diode for low beam 24U forward as the light for low beam using two light distribution adjusting functions, that is, the collimating function by the convex bottom surface section of the light-receiving surface 310 and the reflecting function by the reflector surface 311. Consequently, it is possible to adjust the spread in the vehicle left-right direction of the low beam and secure illuminance. Further, by adopting the inner lens for low beam 30, the size of the light module can be reduced compared to when a reflector for low beam is adopted.

### [Emission surface 32]

The light guided forward by the light-receiving surface 310 and the reflector surface 311 (both the light is nearly collimated light) travels in the light guide section 33 and reach the emission surface 32. Referring to FIGS. 7 to 9, the emission surface 32 is equivalent to the front surface of the inner lens for low beam 30 and is located in front of the light-receiving surface 310 and the reflector surface 311.

FIG. 14 is an enlarged view of the inner lens for low beam 30 in FIG. 4. Referring to FIG. 14, the emission surface 32 includes a left emission surface section 32L and a right emission surface section 32R. The left emission surface section 32L is located on the left side of the center line X of the outer lens 21. The right emission surface section 32R is located on the right side of the center line X.

The left emission surface section 32L refracts light received from (the convex bottom surface sections 310B of) the light-receiving surfaces 310 and the reflector surfaces 311 rightward and emits the light forward. The right emission surface section 32R refracts light received from (the convex bottom surface sections 310B of) the light-receiving surfaces 310 and the reflector surfaces 311 leftward and emits the light forward. As explained below, the emission surface 32 provides diffused light to the light-receiving surface of the outer lens 21. A radiation angle of the diffused light reaching the outer lens 21 is smaller than a radiation angle of the diffused light on the light emitting surfaces of the light emitting diodes for low beam 24U. In other words, the inner lens for low beam 30 adjusts the radiation angle of the diffused light from the light emitting diodes for low beam 24U and narrows the radiation angle to a radiation angle suitable for the light for low beam.

As shown in FIG. 14, in this example, when viewed in the horizontal cross-section through the center of the light emitting diodes for low beam 24U, the emission surface 32 has a ridge shape (a tapered shape) having a peak 32T as a top. The left emission surface section 32L and the right emission surface section 32R are located symmetrically with respect to the center line X of the outer lens 21.

### [Outer lens 21]

Referring to FIG. 4, when viewed in the horizontal cross-section through the light emitting surfaces of the light emitting diodes for low beam 24U, the outer lens 21 includes an emission surface 211 curved forward in a convex shape. The emission surface 211 receives diffused light from the inner lens for low beam 30 and emits the diffused light forward as the light for low beam. The emission surface 211 of the outer lens 21 is convex as explained above. Therefore, when viewed in the horizontal cross-section through the light emitting surfaces of the light emitting diodes for low beam 24U, a radiation angle of the light for low beam (the diffused light) emitted from the emission surface 211 is adjusted to be slightly narrower than a radiation angle of the diffused light received by the outer lens 21 from the inner lens for low beam 30.

The outer lens 21 is transparent. For example, the material of the outer lens 21 may be glass or may be resin. The material of the outer lens 21 is not limited to glass or resin and only has to be a material that is transparent.

### [Optical path of the light module 20 when viewed in the horizontal cross-section]

With the two functions of the inner lens for low beam 30 (the condensing function by the light-receiving surface 310 and the reflecting function by the reflector surface 311), the light module 20 according to the present invention can secure the spread and the illuminance in the left-right direction of the low beam when viewed in the horizontal cross-section through the center of the light emitting diodes for low beam 24U.

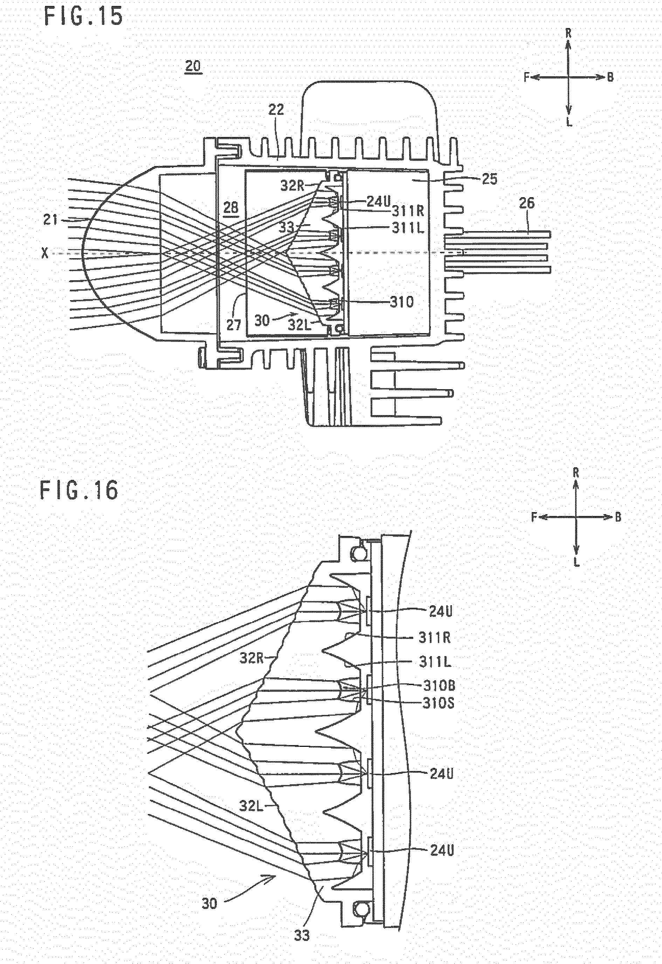

FIG. 15 is a schematic diagram of an optical path of the light module 20 when viewed in the horizontal cross-section through the light emitting surfaces of the light emitting diodes for low beam 24U. FIG. 16 is an enlarged view of a portion near the inner lens for low beam 30 in FIG. 15.

Referring to FIGS. 15 and 16, light emitted from the light emitting diodes for low beam 24U is diffused light. A radiation angle of the diffused light at the time when the diffused light is emitted from the light emitting surfaces of the light emitting diodes for low beam 24U is a wide angle and is, for example, approximately 120°. However, the radiation angle of the diffused light is not limited to approximately 120°. The light emitted from the light emitting diodes for low beam 24U is made incident on the light-receiving surfaces 310.

Most of the light of the light emitting diodes for low beam 24U is made incident on the convex bottom surface sections 310B of the light-receiving surfaces 310. The convex bottom surface sections 310B have a shape curved convex backward. Therefore, the convex bottom surface sections 310B collimate (condense) the received light and guide the light forward (the collimating function). In other words, most of the light emitted by the light emitting diodes for low beam 24U is collimated by the convex bottom surface sections 310B and travel forward. On the other hand, light not made incident on the convex bottom surface sections 310B among light L1 received by the light-receiving surfaces 310 is made incident on the circumferential surface sections 310S. Most of the light made incident on the circumferential surface sections 310S is refracted by the circumferential surface sections 310S and thereafter made incident on the reflector surfaces 311 (the left reflector surface sections 311L or the right reflector surface sections 311R). The left reflector surface sections 311L and the right reflector surface sections 311R totally reflect the received light L1 and guide the light L1 forward as substantially collimated light (the reflecting function).

As explained above, with the collimating function by the light-receiving surfaces 310 and the reflecting function by the reflector surface 311, the inner lens for low beam 30 guides most of the light emitted from the light emitting diodes for low beam 24U forward. Therefore, it is possible to sufficiently secure the illuminance of the low beam in the left-right direction. Further, the light emitted from the inner lens for low beam 30 is diffused and emitted to the outside as the low beam having the spread left and right by the outer lens 21 including the emission surface 211 curved in the convex shape.

The emission surface 32 includes the left emission surface section 32L and the right emission surface section 32R, further, as shown in FIGS. 15 and 16, the collimated lights traveling in the light guide section 33 forward from the light-receiving surfaces 310 and the reflector surfaces 311 is made incident on the left emission surface section 32L and the right emission surface section 32R. At this point, when viewed in the horizontal cross-section through the light emitting surfaces of the light emitting diodes for low beam 24U, the left emission surface section 32L refracts and emits the received light rightward. The right emission surface section 32R refracts and emits the received light leftward. Therefore, most of the emitted light of the left emission surface section 32L and the emitted light of the right emission surface section 32R cross in the housing chamber 28. As a result, the outer lens 21 receives diffused light. A radiation angle of the diffused light at this point is adjusted to be narrower than the radiation angle of the diffused light on the light emitting surfaces of the light emitting diodes for low beam 24U. In short, the light emitted from the inner lens for low beam 30 change to the diffused light when the light is made incident on the outer lens 21 (on the light-receiving surface of the outer lens 21). The radiation angle of the diffused light is a radiation angle narrower than the radiation angle of the diffused light of the light emitting diodes for low beam 24U and suitable for the light for low beam. In short, the inner lens for low beam 30 delivers the diffused light, the radiation angle of which is adjusted to be narrower than the diffused light on the light emitting surfaces of the light emitting diodes for low beam 24U, to the outer lens 21.

The outer lens 21 refracts the received diffused light in the center line X direction and emits the diffused light to the outside from the emission surface 211. In other words, the outer lens 21 further narrows the radiation angle of the received diffused light and emits the diffused light at the radiation angle suitable for the light for low beam.

As explained above, in the case of this example, on the light-receiving surface 310 of the inner lens for low beam 30, the diffused light from the light emitting diodes for low beam 24U are changed to the substantially collimated light. The substantially collimated light travels forward in the light guide section 33 and reaches the emission surface 32. The emission surface 32 emits the received light forward. At this point, the emission surface 32 delivers the diffused light, the radiation angle of which is adjusted to be narrower than the radiation angle of the diffused light on the light emitting surfaces of the light emitting diodes for low beam 24U, to the outer lens 21. The outer lens 21 receives the diffused light from the inner lens for low beam 30 and emits the diffused light, the radiation angle of which is slightly narrowed, forward as the light for low beam.

In this way, in this example, the diffused light of the light emitting diodes for low beam 24U is changed once to the substantially collimated light on the light-receiving surfaces 310 of the inner lens for low beam 30. The diffused light is formed on the emission surface 32. Consequently, it is possible to adjust the radiation angle of the diffused light from the light emitting diodes for low beam 24U. The radiation angle of the diffused light from the inner lens for low beam 30 is further adjusted using the convex outer lens 21 to the radiation angle suitable for the light for low beam.

If the inner lens for low beam of this example is used, the illuminance in the center region in the light distribution region of the low beam can be higher than the illuminance of the peripheral region of the center region. It is possible to intentionally form a variation of the illuminance (illuminance unevenness).

### [Reduction in the size of the light module 20 by application of the inner lens 30]

By using the inner lens for low beam 30 having the functions explained above, the size of the light module 20 can be reduced more than in the projector-type light module in the past.

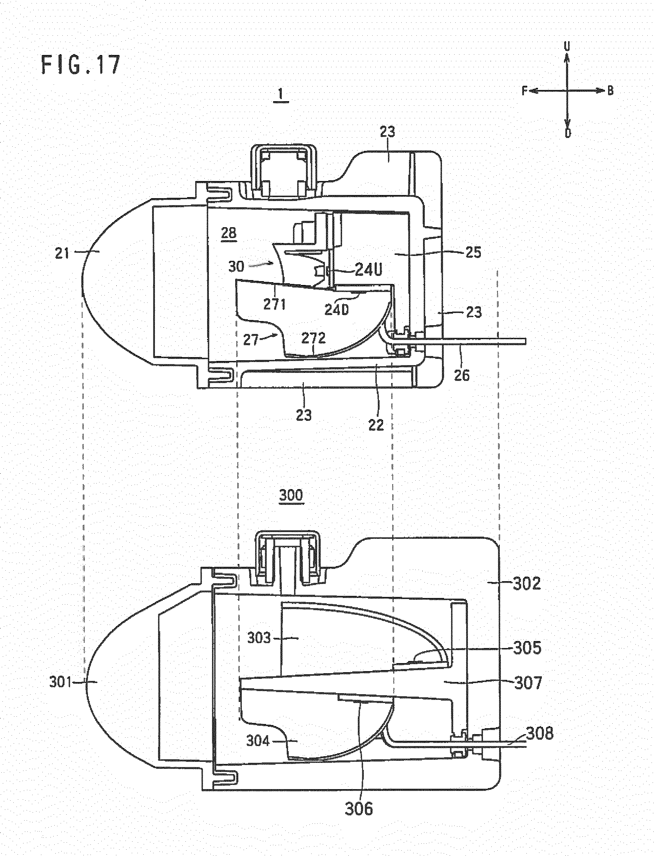

FIG. 17 is a comparative diagram of the light module 20 and a projector-type light module 300 when viewed in the vertical cross-section through the light emitting surface of the light emitting diode for low beam 24U.

Usually, a low beam is diffused and emitted to a wider range when viewed in the horizontal cross-section and the vertical cross-section than a high beam. In other words, a range of a light distribution region in the left-right direction of the low beam is wider than the range of the high beam. In a light module, light emitted from an outer lens is further diffused and the light distribution region further expands as the focus of a reflector is located further backward in a light module. Therefore, in the projector-type light module 300 in the past, in order to widen the range of the light distribution region of the low beam to be wider than the range of the light distribution region of the high beam, the focus of a reflector for low beam 303 is located behind the focus of a reflector for high beam 304. As a result, the rear end of the reflector for low beam 303 is located behind the rear end of the reflector for high beam 304. Since the reflector for low beam 303 is shifted to behind the reflector for high beam 304, the projector-type light module 300 is long in the front-rear direction.

On the other hand, in the light module 20 in this embodiment, the inner lens for low beam 30 is used instead of the reflector for low beam 303. If the inner lens for low beam 30 is used, even if the light emitting diode for low beam 24U is located in front of the light emitting diode for high beam 24D, the light module 20 can form the low beam sufficiently wide in the left-right direction and having high illuminance.

As shown in FIG. 17, the length of the inner lens for low beam 30 including the functions explained above can be reduced in the front-rear direction compared with the reflector for low beam 303. Therefore, as shown in FIG. 17, the front-rear length of the light module 20 can be reduced compared with the front-rear length of the light module 300 including the pair of reflectors 303 and 304. As a result, the size of the light module 20 can be reduced.

Note that, when a light module includes only the low beam function, the size of the light module including the inner lens for low beam 30 can be reduced more than in the light module including the reflector for low beam 303. This is because, as explained above, the length of the inner lens for low beam 30 can be reduced in the front-rear direction compared with the reflector for low beam 303.

### [Shape of the inner lens 30 when viewed in the vertical cross-section]

As explained above, in the light module 20 according to the present invention, when viewed in the horizontal cross-section through the light emitting surfaces of the light emitting diodes for low beam 24U, it is possible to realize the low beam having the spread in the left-right direction and having high illuminance with the condensing function of the light-receiving surfaces 310 and the reflecting function of the reflector surfaces 311.

When viewed in the vertical cross-section through the light emitting surface of the light emitting diode for low beam 24U, the shape of the light module 20 is suitable as explained below.

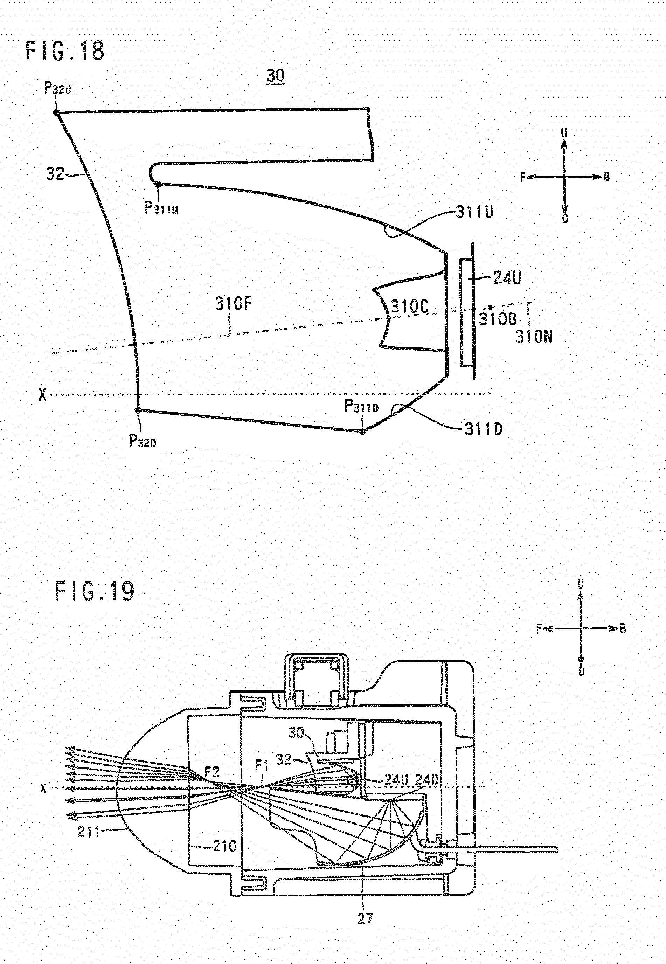

FIG. 18 is a sectional view of a portion near the inner lens for low beam 30 when viewed in the vertical cross-section through the light emitting surface of the light emitting diode for low beam 24U. Referring to FIG. 18, when viewed in the vertical cross-section, the convex bottom surface section 310B also has a convex shape curved convex backward. The circumferential surface section 310S is cylindrical. The width of the circumferential surface section 310S gradually decreases from the rear toward the front.

The reflector surface 311 includes an upper reflector surface section 311U and a lower reflector surface section 311D. The upper reflector surface section 311U is located above the light-receiving surface 310. The upper reflector surface section 311U reflects light from (the circumferential surface 310S of) the light-receiving surface 310 and guides the light forward. The lower reflector surface section 311D is located below the light-receiving surface 310. The lower reflector surface section 311D reflects light from (the circumferential surface section 310S of) the light-receiving surface 310 and guides the light forward. The rear ends of the upper reflector surface section 311U and the lower reflector surface section 311 D are connected to the rear end of the light-receiving surface 310.

In FIG. 18, a center 310C of the convex bottom surface section 310B is offset from the center line X of the outer lens 21. By locating the inner lens for low beam 30 to deviate from the center line X, a space can be secured in a peripheral region of the center line X. Therefore, it is possible to provide, in the space, other functions (in this example, installation of the reflector for high beam 27) other than the inner lens for low beam 30. Therefore, flexibility of design flexibility of the light module increases. As in this example, the center 310C of the convex bottom surface section 310B is desirably located above the center line X.

A normal 310N through the center 310C of the convex bottom surface section 310B desirably tilts with respect to the center line X of the outer lens 21. A point 310F located in front of the convex bottom surface section 310B in the normal 310N is more desirably located below a point 310B located behind the convex bottom surface section 310B. In short, the normal 310N tilts downward toward the front. In this case, light condensed by the convex bottom surface section 310B travels obliquely downward toward the front. Therefore, it is possible to easily form the light for low beam when viewed in the vertical cross-section.

In this example, when viewed in the horizontal cross-section through the light emitting surface of the light emitting diode for low beam 24U (see FIG. 13), the shape of the light-receiving surface 310 is symmetrical with respect to the normal 310N through the center of the convex bottom surface section 310B. On the other hand, when viewed in the vertical cross-section through the light emitting surface of the light emitting diode for low beam 24U (see FIG. 18), the shape of the light-receiving surface 310 is asymmetrical with respect to the normal 310N through the center of the convex bottom surface section 310B. In the inner lens for low beam 30, by making the shape of the light-receiving surface 310 symmetrical when viewed in the horizontal cross-section and asymmetrical when viewed in the vertical cross-section, it is possible to form a light distribution region (i.e., a low beam) located below the center line X of the outer lens 21 in the up-down direction while forming a uniform light distribution region in the left-right direction.

Further, in FIG. 18, one of a front end P_{311U} of the upper reflector surface section 311U and a front end P_{311D} of the lower reflector surface section 311D is located in front of the other. In this example, the front end P_{311U} is located in front of the front end P_{311D}. In this case, an amount of light reflected by the upper reflector surface section 311U is larger than an amount of light reflected by the lower reflector surface section 311D. Therefore, it is easier to increase the illuminance of the low beam.

### [Optical path of the low beam of the light module 20 when viewed in the vertical cross-section]

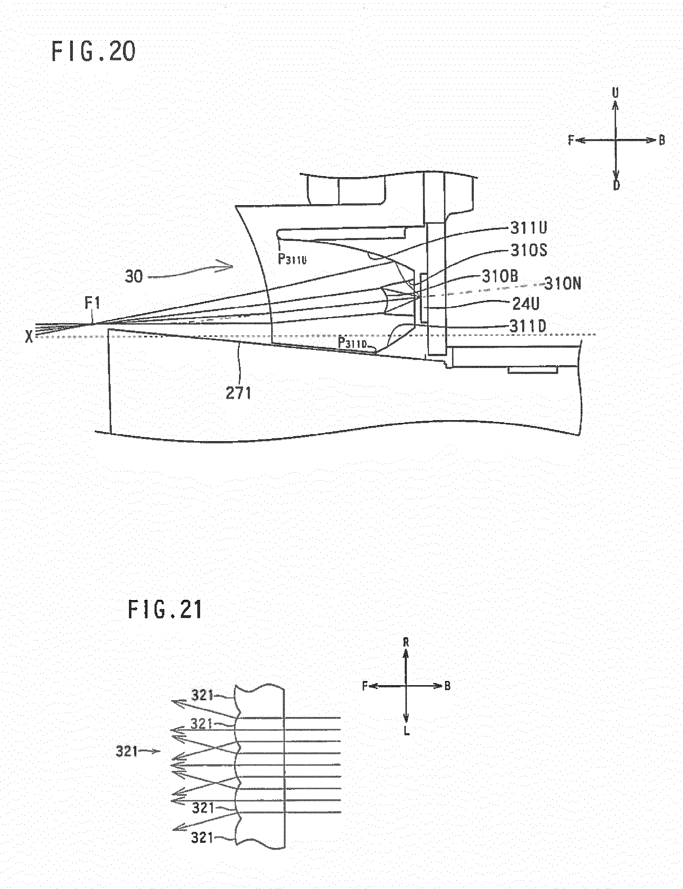

FIG. 19 is a schematic diagram of an optical path of the light module 20 when viewed in the vertical cross-section through the light emitting surface of the light emitting diode for low beam 24U. FIG. 20 is an enlarged view of a portion near the inner lens for low beam 30 in FIG. 19.

Referring to FIGS. 19 and 20, most of emitted light (diffused light) of the light emitting diode for low beam 24U is made incident on the convex bottom surface section 310B in the light-receiving surface 310. The convex bottom surface section 310B has a shape curved convex backward. Therefore, the convex bottom surface section 310B collimates (condenses) the received light and guides the light forward. As explained above, the normal 310N of the convex bottom surface section 310B tilts with respect to the center line X. More specifically, the normal 310N tilts obliquely downward towards the front. Therefore, the light condensed by the convex bottom surface section 310B does not travel in parallel to the center line X and travel obliquely downward towards the front with respect to the center line X. The light is emitted from the emission surface 32 and thereafter condensed near a focus F1 in the housing chamber 28. Thereafter, the light is made incident on the rear surface 210 of the outer lens 21 as diffused light. The outer lens 21 refracts the light slightly upward on the emission surface 211 and emits the light to the outside as the light for low beam.

On the other hand, a part of the emitted light (the diffused light) of the light emitting diode for low beam 24U is made incident on the circumferential surface section 310S without being made incident on the convex bottom surface section 310B in the light-receiving surface 310. In this case, the light is refracted by the circumferential surface section 310S and thereafter reach the upper reflector surface section 311U and the lower reflector surface section 311D. The upper reflector surface section 311U and the lower reflector surface section 311D reflect the light and guide the light forward. At this point, most of the light reflected by the upper reflector surface section 311U and the lower reflector surface section 311D is inclined with respect to the center line X. More specifically, the light travels obliquely downward toward the front with respect to the center line X. The light is also emitted from the emission surface 32 and thereafter condensed near the focus F1. Thereafter, the light is made incident on the rear surface 210 of the outer lens 21 as diffused light. The outer lens 21 refracts the light slightly upward on the emission surface 211 and emits the light to the outside as the light for low beam.

As explained above, the light module 20 including the inner lens for low beam 30 and the outer lens 21 can form the low beam.

### [Optical path of the high beam of the light module 20 when viewed in the vertical cross-section]

As shown in FIG. 5, when the light module 20 of the present invention includes the light emitting diode for high beam 24D and the reflector for high beam 27, an optical path of light emitted from the light emitting diode for high beam 24D is as explained below.

Referring to FIG. 19, the light emitting diode for high beam 24D emits light downward. The light emitted from the light emitting diode for high beam 24D is diffused light. Most of the diffused light is reflected on the reflection bottom plate 272 of the reflector for high beam 27 and travel obliquely front upward. Most of the reflected light is condensed near a focus F2 located in front of the focus F1. Thereafter, the light travels as the diffused light and is refracted in the center line X direction on the rear surface 210 of the outer lens 21. The light after the refraction travels in the outer lens 21 and is refracted in a direction away from the center line X on the emission surface 211 and emitted to the outside as the high beam.

Note that the focus F2 is located in front of the focus F1. Therefore, the spread in the up-down direction of the high beam is narrower than the spread in the up-down direction of the low beam. As explained above, the light module 20 emits the high beam and the low beam.

### [Other configurations of the light module 20]

The embodiment of the present invention was explained above. However, the embodiment is only an illustration for carrying out the present invention. Therefore, the present invention is not limited to the embodiment and can be carried out by changing the embodiment as appropriate without departing from the scope of the invention, as defined by the appended claims.

As shown in FIGS. 7 to 9, FIG. 13, and the like, when viewed in the horizontal cross-section through the light emitting surface of the light emitting diode for low beam 24U, the emission surface 32 of the inner lens for low beam 30 may include a plurality of convex sections 321 arrayed in the left-right direction. FIG. 21 is a horizontal sectional view of the vicinity of the emission surface 32. Referring to FIG. 21, a horizontal sectional shape of the convex sections 321 serving as an example is a bow shape. The convex sections 321 may be semispherical lenses or semi-ellipsoidal lenses or may be cylindrical lenses extending in the vertical direction. The shapes of the convex sections 321 may be different from one another. The emission surface 32 may include the plurality of convex sections 321 having the same shape. The plurality of convex sections 321 further diffuses incident light. Therefore, it is possible to blur the contour of the light distribution region of the low beam in the left-right direction.

The convex sections 321 preferably extend in the vertical direction. In this case, it is possible to blur the contour of the light distribution region in the left-right direction of the low beam and clarify the contour in the up-down direction.

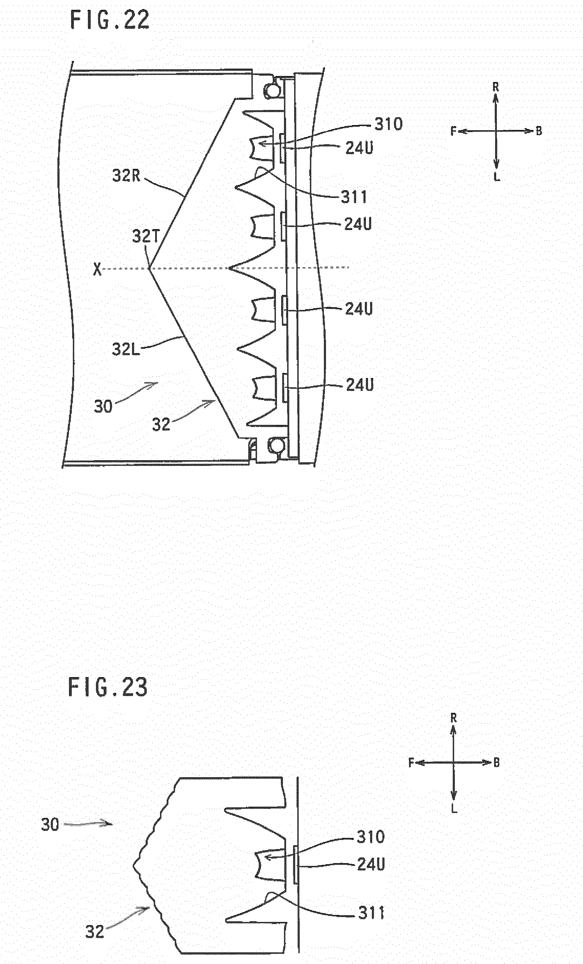

Note that, as shown in FIG. 22, the emission surface 32 may be flat without including the convex sections 321. In this case, the contour of the light distribution region of the low beam is clear.

In the embodiment, the light module 20 includes the plurality of light emitting diodes for low beam 24U and the inner lens for low beam 30 includes the plurality of light-receiving surfaces 310 and the plurality of reflector surfaces 311. However, as shown in FIG. 23, only one light emitting diode for low beam 24U may be included in the light module 20. FIG. 23 is a sectional view of the vicinity of the inner lens for low beam 30 of the light module 20 when viewed in the horizontal plane through the center of the light emitting diode for low beam 24U. In FIG. 23, one light-receiving surface 310 and one reflector surface 311 are provided in the inner lens for low beam 30.

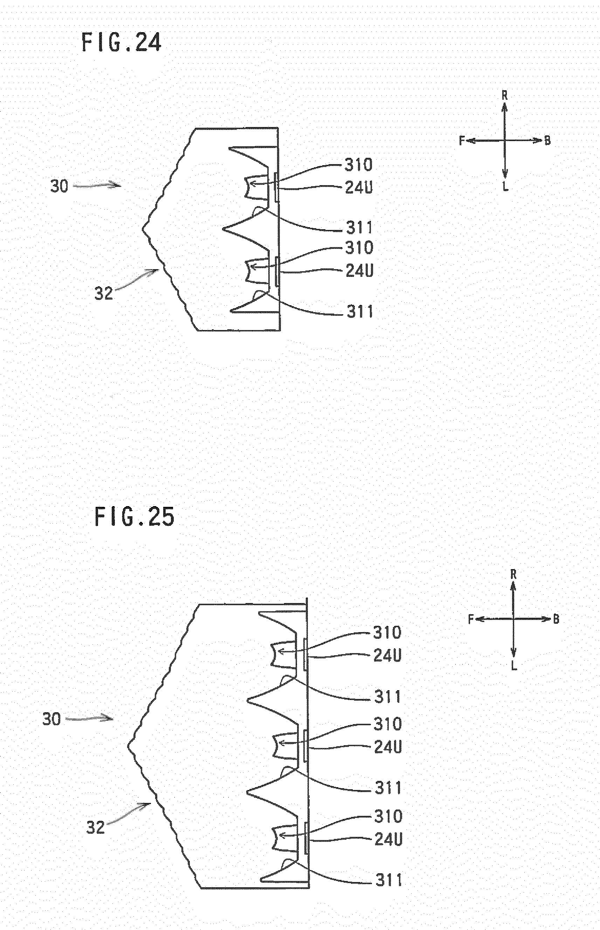

The number of the light emitting diodes for low beam 24U provided in the light module 20 is not particularly limited. As shown in FIG. 24, two light emitting diodes for low beam 24U may be located side by side in the left-right direction. In this case, two light-receiving surfaces 310 are also located side by side in the left-right direction and two reflector surfaces 311 are also located side by side in the left-right direction.

As shown in FIG. 25, three light emitting diodes for low beam 24U may be located side by side in the left-right direction. In this case, three light-receiving surfaces 310 are also located side by side in the left-right direction and three reflector surfaces 311 are also located side by side in the left-right direction.

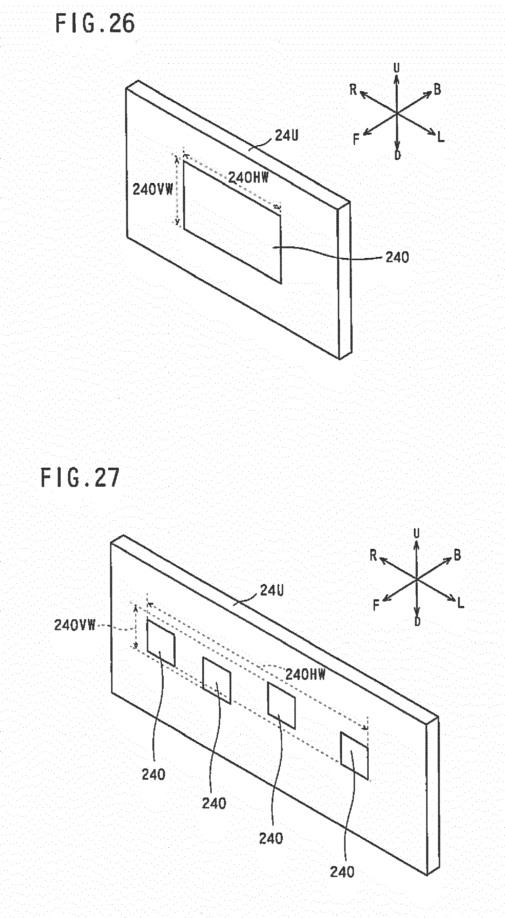

FIG. 26 is a perspective view of the light emitting diode for low beam 24U shown in FIG. 23. Referring to FIG. 26, desirably, width 240HW in the left-right direction of the light module 20 of a light emitting surface 240 of the light emitting diode for low beam 24U is larger than width 240VW in the up-down direction of the light module 20. In this case, in the light distribution region of the low beam, the width in the left-right direction of the light module 20 is larger than the width in the up-down direction of the light module 20. It is possible to form the light distribution region more appropriate for the low beam. However, in FIG. 26, the width 240HW may be equal to the width 240VW (i.e., the light emitting surface 240 may be a square) or may be smaller than the width 240VW. Note that the light emitting surface 240 is not limited to a rectangle. The light emitting surface 240 may be a circle or an ellipse or may be a polygon (a triangle, a pentagon, etc.).

Note that, as shown in FIG. 27, the light emitting diode for low beam 24U may include a plurality of light emitting surfaces 240 arrayed in the left-right direction of the light module 20 on a board. When the light module 20 includes the plurality of light emitting surfaces 240 arrayed in the left-right direction of the light module 20 in this way, the width 240HW in the left-right direction of the light module 20 of the light emitting surface 240 is defined by the distance between the left-most end of the light emitting surface 240 located at the left-most end and the right-most end of the light emitting surface 240 located at the right-most end among the plurality of light emitting surfaces 240 arrayed on the left and the right. Similarly, the width 240VW in the up-down direction of the light module 20 of the light emitting surface 240 is defined by the distance between the uppermost end and the lowermost end of the plurality of light emitting surfaces 240 arrayed in the left-right direction.

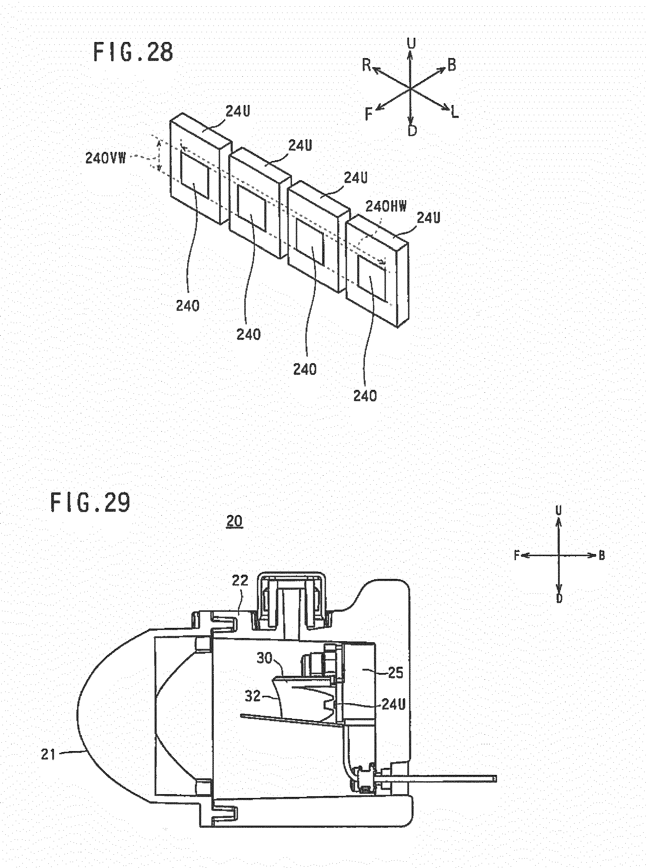

FIG. 28 is a perspective view of the plurality of light emitting diodes for low beam 24U arrayed in the left-right direction of the light module 20 in the light module 20 shown in FIG. 4. In FIG. 28, the definitions of the width 240HW and the width 240VW are the same as the definitions in FIG. 27.

As shown in FIGS. 4, 24, and 25, when viewed in the horizontal cross-section through the light emitting surfaces of the light emitting diodes for low beam 24U, desirably, at least one of the plurality of light emitting diodes for low beam 24U is located on the left side of the center line X of the outer lens 21 and at least one of the plurality of light emitting diodes for low beam 24U is located on the right side of the center line X of the outer lens 21. Similarly, desirably, at least one of the plurality of light-receiving surfaces 310 is located on the left side of the center line X of the outer lens 21 and at least one of the plurality of light-receiving surfaces 310 is located on the right side of the center line X of the outer lens 21. Desirably, at least one of the plurality of reflector surfaces 311 is located on the left side of the center line X of the outer lens 21 and at least one of the plurality of reflector surfaces 311 is located on the right side of the center line X of the outer lens 21.

In this case, when viewed in the horizontal cross-section through the light emitting surfaces of the light emitting diodes for low beam 24U, the illuminance of the light distribution region of the low beam on the left side of the center line X of the outer lens 21 can be matched to the illuminance of the light distribution region of the low beam on the right side of the center line X of the outer lens 21 to a certain degree.

As shown in FIGS. 4 and 24, when viewed in the horizontal sectional view through the light emitting surfaces of the light emitting diodes for low beam 24U, the number of the light emitting diodes for low beam 24U located on the left side of the center line X of the outer lens 21 is desirably equal to the number of the light emitting diodes for low beam 24U located on the right side of the center line X of the outer lens 21. In this case, the number of the light-receiving surfaces 310 located on the left side of the center line X of the outer lens 21 is equal to the number of the light-receiving surfaces 310 located on the right side of the center line X of the outer lens 21. The number of the reflector surfaces 311 located on the left side of the center line X of the outer lens 21 is equal to the number of the reflector surfaces 311 located on the right side of the center line X of the outer lens 21.

In this case, when viewed in the horizontal cross-section through the light emitting surfaces of the light emitting diodes for low beam 24U, the illuminance of the light distribution region of the low beam on the left side of the center line X of the outer lens 21 can uniformly be matched to the illuminance of the light distribution region of the low beam on the right side of the center line X of the outer lens 21.

However, when viewed in the horizontal sectional view through the light emitting surfaces of the light emitting diodes for low beam 24U, the number of the light emitting diodes for low beam 24U located on the left side of the center line X of the outer lens 21 may be different from the number of the light emitting diodes for low beam 24U located on the right side of the center line X of the outer lens 21. The number of the light-receiving surfaces 310 located on the left side of the center line X of the outer lens 21 may be different from the number of the light-receiving surfaces 310 located on the right side of the center line X of the outer lens 21. The number of the reflector surfaces 311 located on the left side of the center line X of the outer lens 21 may be different from the number of the reflector surfaces 311 located on the right side of the center line X of the outer lens 21.

As shown in FIGS. 4 and 24, when viewed in the horizontal cross-section through the light emitting surfaces of the light emitting diodes for low beam 24U, the plurality of light emitting diodes for low beam 24U is desirably located in positions symmetrical with respect to the center line X of the outer lens 21. The plurality of light-receiving surfaces 310 is located in positions symmetrical with respect to the center line X of the outer lens 21. The plurality of reflector surfaces 311 is located in positions symmetrical with respect to the center line X of the outer lens 21.

In this case, when viewed in the horizontal cross-section through the light emitting surfaces of the light emitting diodes for low beam 24U, the illuminance of the light distribution region of the low beam on the left side of the center line X of the outer lens 21 can uniformly be matched to the illuminance of the light distribution region of the low beam on the right side of the center line X of the outer lens 21.

However, when viewed in the horizontal cross-section through the light emitting surfaces of the light emitting diodes for low beam 24U, the plurality of light emitting diodes for low beam 24U do not have to be located in positions symmetrical with respect to the center line X of the outer lens 21. The plurality of light-receiving surfaces 310 do not have to be located in positions symmetrical with respect to the center line X of the outer lens 21. The plurality of reflector surfaces 311 do not have to be located in positions symmetrical with respect to the center line X of the outer lens 21.

When viewed in the horizontal cross-section through the light emitting surfaces of the light emitting diodes for low beam 24U, one of a front end P_{311L} of the left reflector surface section 311L and a front end P_{311R} of the right reflector surface section 311R of the reflector surface 311 is desirably located in front of the other. In this case, when viewed in the horizontal cross-section through the center of the light emitting diodes for low beam 24U, the left reflector surface section 311 L and the right reflector surface section 311R have different lengths. In this case, it is possible to design the shape of the reflector surface 311 taking into account the shape, the strength of the material, and the like of the inner lens for low beam 30.

Note that, in this example, as shown in FIG. 4, when viewed in the horizontal cross-section through the light emitting surfaces of the light emitting diodes for low beam 24U, of the front end P_{311L} of the left reflector surface section 311L and the front end P_{311R} of the right reflector surface section 311R of the reflector surface 311, the front end closer to the center line X of the outer lens 21 is located in front of the front end farther from the center line X. In FIG. 4, the light guide section 33 of the inner lens for low beam 30 decreases in thickness farther away from the center line X. It is possible to secure the strength of the inner lens for low beam 30 by adjusting the front end positions of the reflector surface sections according to the thickness.

In the embodiment, the light module 20 emits the low beam and the high beam. However, as shown in FIG. 29, the light module 20 may emit the low beam and not emit the high beam. In this case, the light module 20 includes the light emitting diodes for low beam 24U and the inner lens for low beam 30 and does not include the light emitting diode for high beam 24D and the reflector for high beam 27.

In the embodiment, as shown in FIG. 5, the ceiling plate 271 of the reflector for high beam 27 extends obliquely upward toward the front. In front view, a part of a lower part of the inner lens for low beam 30 and the ceiling plate 271 may overlap. In this case, light emitted from the vicinity of a lower end 32B of the emission surface 32 of the inner lens for low beam 30 is blocked by the ceiling plate 271. Consequently, when viewed in the vertical cross-section including the center of the light emitting diode for low beam 24U, light of the light emitting diode for low beam 24U is suppressed from being emitted, to above the center line X of the outer lens 21.

Similarly, in the embodiment, the light module 20 includes one light emitting diode for high beam 24D. However, a plurality of light emitting diodes for high beam 24D may be located.

The inner lens for low beam 30 integrally includes the light-receiving surfaces 310, the reflector surfaces 311, and the emission surface 32. However, the shape of the inner lens for low beam 30 is not limited to the embodiment. For example, the inner lens for low beam 30 may include a rear member including the light-receiving surfaces 310 and the reflector surfaces 311 and a front member located in front of the rear member and including the emission surface 32. In short, in the inner lens for low beam 30, the light-receiving surfaces 310, the reflector surfaces 311, and the emission surface 32 do not have to be integrally molded.

In the embodiment, the headlight 10 is attached to the front cowl 5. However, a position to which the headlight 10 is attached is not limited to the front cowl 5. For example, the headlight 10 may be attached to a bracket supported by a vehicle body frame or may be attached to another member.

In the embodiment, the reflector surface 311 has the tapered shape gradually decreasing in width from the front toward the rear. However, the shape of the reflector surface 311 is not limited to such a tapered shape. The shape of the reflector surface 311 is not particularly limited as long as the reflector surface 311 can reflect light from the light emitting diodes for low beam 24U and guide the light forward.

When viewed in the horizontal cross-section including the center of the light emitting diodes for low beam 24U, the shape of the emission surface 32 is not limited to the ridge shape. The shape of the emission surface 32 may be a bow shape recessed backward or may be a shape having a plurality of steps. The shape of the emission surface 32 is not particularly limited as long as the emission surface 32 refracts and emits light received by the left emission surface section 32L rightward and refracts and emits light received by the right emission surface section 32R leftward.

When viewed in the horizontal cross-section including the center of the light emitting diodes for low beam 24U, the left emission surface section 32L and the right emission surface section 32R do not have to be located symmetrically with respect to the center line X. The left emission surface section 32L and the right emission surface section 32R may be located asymmetrically with respect to the center line X.

In FIG. 5, the light emitting diode for high beam 24D is located below the center line X and located below the light emitting diodes for low beam 24U. However, the disposition of the light emitting diode for high beam 24D is not limited to this.

The shape and the disposition of the heat sink 25 are not particularly limited as long as the heat sink 25 can remove heat generated by the light emitting diodes for low beam 24U and the light emitting diode for high beam 24D and discharge the heat to the outside.

## Claims

1. A light module (20) for a headlight (10) of a vehicle, the light module (20) comprising:
a light emitting diode for low beam (24U) including a light emitting surface to emit first light in a forward direction;
an inner lens for low beam (30) including a rear surface (31) which is a surface configured to receive the first light emitted from the light emitting diode for low beam (24U), a first emission surface (32) and a light guide section (33) which is configured to guide the first light received by the rear surface (31) to the first emission surface (32), wherein, when viewed in a horizontal cross-section through the light emitting surface of the light emitting diode for low beam (24U)
the rear surface (31) includes:
a concave light-receiving surface (310) located in front of the light emitting diode for low beam (24U) in a front-rear direction of the light module (20) and including a convex bottom surface section (310B) formed in a convex shape centrally projecting in a backward direction and a circumferential surface section (310S), the light-receiving surface (310) to receive the first light from the light emitting diode for low beam (24U); and
a reflector surface (311) including a right reflector surface section (311R) located on the right of the light-receiving surface in a left-right direction of the light module, the right reflector surface section (311R) to reflect the first light received by the light-receiving surface (310), and a left reflector surface section (311L) located on the left of the light-receiving surface (310) in the left-right direction of the light module (20), the left reflector surface section (311L) to reflect the first light;
the first emission surface (32) is located in front of the convex bottom surface section (310B), the left reflector surface section (311L), and the right reflector surface section (311R), the first emission surface (32) to emit the first light received by the light-receiving surface (310); and
an outer lens (21) located in front of the inner lens for low beam (30) and including a second emission surface (211) formed in a convex shape, the second emission surface (211) to receive the first light emitted from the first emission surface (32) and to emit the first light for low beam, the inner lens (30) further includes a lower surface (35), located in the light guide section (33), the lower surface (35) connects the first emission surface (32) and the rear surface (31), wherein
when viewed in a horizontal cross-section through the light emitting surface of the light emitting diode for low beam (24U),
the first emission surface (32) includes:
a left first emission surface section (32L) located on the left side of the center line of the outer lens (21) in the left-right direction of the light module (20), the left first emission surface section (32L) to refract rightward and emit the first light received from the light-receiving surface (310) and the reflector surface (311); and
a right first emission surface section (32R) located on the right side of the center line of the outer lens (21) in the left-right direction of the light module (20), the right first emission surface section (32R) to refract leftward and emit the first light received from the light-receiving surface (310) and the reflector surface (311), **characterized in that**, when viewed in a vertical cross-section through the light emitting surface of the light emitting diode for low beam (24U), the first emission surface (32) is formed in a concave shape.

2. The light module (20) for the headlight (10) of the vehicle according to claim 1, wherein
the light module (20) includes a single one of the light emitting diode for low beam (24U) or a plurality of the light emitting diodes for low beam (24U) arrayed in the left-right direction of the light module (20), and
a width in the left-right direction of the light module (20) of a single one or a plurality of the light emitting surfaces of the single one or the plurality of light emitting diodes for low beam (24U) is larger than a width in an up-down direction of the light module (20) of the single one or the plurality of light emitting surfaces of the single one or the plurality of light emitting diodes for low beam (24U).

3. The light module (20) for the headlight (10) of the vehicle according to claim 1 or 2, wherein,
when viewed in a horizontal cross-section through the light emitting surface of the light emitting diode for low beam (24U),
the light module (20) includes a plurality of the light emitting diodes for low beam (24U) arrayed in the left-right direction of the light module (20),
the inner lens for low beam (30) includes:
a plurality of the light-receiving surfaces (310) arrayed in the left-right direction of the light module (20), each of the light-receiving surfaces (310) being located in front of the respective light emitting diode for low beam (24U); and
a plurality of the reflector surfaces (311) arrayed in the left-right direction of the light module (20), each of the left reflector surface sections (311L) in the respective reflector surface (311) being located on the left of the respective light-receiving surface (310) in the left-right direction of the light module (20) and each of the right reflector surface sections (311R) in the respective reflector surface (311) being located on the right of the respective light-receiving surface (310) in the left-right direction of the light module (20),
wherein the first emission surface (32) is located in front of the plurality of light-receiving surfaces (310) and the plurality of left reflector surface sections (311L) and the plurality of right reflector surface sections (311R) in the front-rear direction of the light module (20) and is to emit the first light received by the plurality of light-receiving surfaces (310), and
wherein the outer lens (21) is to receive the first light emitted from the first emission surface (32) and to emit the first light from the second emission surface (211) formed in the convex shape.

4. The light module (20) for the headlight (10) of the vehicle according to claim 3, wherein
when viewed in a horizontal cross-section through the light emitting surface of the light emitting diode for low beam (24U),
at least one of the plurality of light emitting diodes for low beam (24U) is located on a left side of a center line of the outer lens (21) and at least one of the plurality of light emitting diodes for low beam (24U) is located on a right side of the center line of the outer lens (21) in the left-right direction of the light module (20),
at least one of the plurality of light-receiving surfaces (310) is located on the left side of the center line of the outer lens (21) and at least one of the plurality of light-receiving surfaces (310) is located on the right side of the center line of the outer lens (21) in the left-right direction of the light module (20), and
at least one of the plurality of reflector surfaces (311) is located on the left side of the center line of the outer lens (21) and at least one of the plurality of reflector surfaces (311) is located on the right side of the center line of the outer lens (21) in the left-right direction of the light module (20).

5. The light module (20) for the headlight (10) of the vehicle according to claim 4, wherein
when viewed in a horizontal cross-section through the light emitting surface of the light emitting diode for low beam (24U),
a number of the light emitting diodes for low beam (24U) located on the left side of the center line of the outer lens (21) is equal to a number of the light emitting diodes for low beam (24U) located on the right side of the center line of the outer lens (21) in the left-right direction of the light module (20),
a number of the light-receiving surfaces (310) located on the left side of the center line of the outer lens (21) is equal to a number of the light-receiving surfaces (310) located on the right side of the center line of the outer lens (21) in the left-right direction of the light module (20), and
a number of the reflector surfaces (311) located on the left side of the center line of the outer lens (21) is equal to a number of the reflector surfaces (311) located on the right side of the center line of the outer lens (21) in the left-right direction of the light module (21).

6. The light module (20) for the headlight (10) of the vehicle according to claim 5, wherein
when viewed in a horizontal cross-section through the light emitting surface of the light emitting diode for low beam (24U),
the plurality of light emitting diodes for low beam (24U) is located in positions symmetrical with respect to the center line of the outer lens (21) in the left-right direction of the light module (20),
the plurality of light-receiving surfaces (310) is located in positions symmetrical with respect to the center line of the outer lens (21) in the left-right direction of the light module (20), and
the plurality of reflector surfaces (311) is located in positions symmetrical with respect to the center line of the outer lens (21) in the left-right direction of the light module (20).

7. The light module (20) for the headlight (10) of the vehicle according to any one of claims 1 to 6, wherein, when viewed in a horizontal cross-section through the light emitting surface of the light emitting diode for low beam (24U), one of a front end of the left reflector surface section (311L) and a front end of the right reflector surface section (311R) of the reflector surface (311) is located in front of the other in the front-rear direction of the light module (20).

8. The light module (20) for the headlight (10) of the vehicle according to any one of claims 1 to 7, wherein
when viewed in a horizontal cross-section through the light emitting surface of the light emitting diode for low beam (24U), a shape of the circumferential surface section (310S) of the light-receiving surface (310) is symmetrical with respect to a normal (310N) passing a center of the convex bottom surface section (310B), and
when viewed in a vertical cross-section through the light emitting surface of the light emitting diode for low beam (24U), the shape of the circumferential surface section (310S) of the light-receiving surface (310) is asymmetrical with respect to the normal (310N) passing the center of the convex bottom surface section (310B).

9. The light module (20) for the headlight (10) of the vehicle according to any one of claims 1 to 8, wherein, when viewed in a vertical cross-section through the light emitting surface of the light emitting diode for low beam (24U), a center of the convex bottom surface section (310B) of the light-receiving surface (310) is offset from the center line of the outer lens (21).

10. The light module (20) for the headlight (10) of the vehicle according to any one of claims 1 to 9, wherein, when viewed in a vertical cross-section through the light emitting surface of the light emitting diode for low beam (24U), a normal (310N) of a center of the convex bottom surface section (310B) of the light-receiving surface (310) is tilted with respect to the center line of the outer lens (21) and, in the front-rear direction of the light module (20), a point in front of the convex bottom surface section (310B) in the normal (310N) is located below a point behind the convex bottom surface section (310B) in the normal (310N).

11. The light module (20) for the headlight (10) of the vehicle according to any one of claims 1 to 10, wherein
when viewed in a vertical cross-section through the light emitting surface of the light emitting diode for low beam (24U),
the reflector surface (311) includes:
an upper reflector surface section (311U) located above the convex bottom surface section (310B) in an up-down direction of the light module (20), the upper reflector surface section (311U) to reflect the first light received by the light-receiving surface (310); and
a lower reflector surface section (311D) located below the convex bottom surface section (310B) in the up-down direction of the light module (20), the lower reflector surface section (311D) to reflect the first light received by the light-receiving surface (310), and
a front end of the upper reflector surface section (311U) is located in front of a front end of the lower reflector surface section (311D) in the front-rear direction of the light module (20).

12. The light module (20) for the headlight (10) of the vehicle according to any one of claims 1 to 11, wherein, when viewed in a horizontal cross-section through the light emitting surface of the light emitting diode for low beam (24U), the left first emission surface section (32L) and the right first emission surface section (32R) are located symmetrically with respect to the center axis of the outer lens (21).

13. The light module (20) for the headlight (10) of the vehicle according to any one of claims 1 to 12, wherein, when viewed in a vertical cross-section through the light emitting surface of the light emitting diode for low beam (24U), an upper end of the first emission surface (32) is located in front of a lower end of the first emission surface (32) in the front-rear direction of the light module (20).

14. The light module (20) for the headlight (10) of the vehicle according to any one of claims 11 to 13, wherein, when viewed in a horizontal cross-section through the light emitting surface of the light emitting diode for low beam (24U), the first emission surface (32) includes a plurality of convex sections (321) arrayed in the left-right direction of the light module (20).

15. The light module (20) for the headlight (10) of the vehicle according to any one of claims 1 to 14, wherein
when viewed in a vertical cross-section through the light emitting surface of the light emitting diode for low beam (24U),
the light module (20) further comprises:
a light emitting diode for high beam (24D) to emit a second light in a forward direction; and
a reflector (27) to receive the second light from the light emitting diode for high beam (24D) and to guide the second light to above the center line of the outer lens (21) in an up-down direction of the light module (20), and
the outer lens (21) to receive the second light guided by the reflector (27) and to emit the second light as light for high beam.

16. The light module (20) for the headlight (10) of the vehicle according to claim 15, wherein, when viewed in a vertical cross-section through the light emitting surface of the light emitting diode for low beam (24U), the light emitting diode for high beam (24D) is located behind the light emitting diode for low beam (24U) in the front-rear direction of the light module (20).

17. A headlight (10) for a vehicle comprising the light module (20) according to any one of claims 1 to 16.

18. A vehicle (1) comprising the headlight (10) according to claim 17.

## Patentansprüche

1. Ein Lichtmodul (20) für einen Scheinwerfer (10) eines Fahrzeugs, wobei das Lichtmodul (20) umfasst:
eine lichtemittierende Diode für Abblendlicht (24U), die eine lichtemittierende Oberfläche beinhaltet, um erstes Licht in eine vorwärts-Richtung zu emittieren;
eine innere Linse für Abblendlicht (30), die eine hintere Oberfläche (31), die eine Oberfläche ist, die konfiguriert ist, das von der lichtemittierenden Diode für Abblendlicht (24U) emittierte erste Licht zu empfangen, eine erste Emissionsoberfläche (32) und einen Lichtführungsabschnitt (33) beinhaltet, der konfiguriert ist, das durch die hintere Oberfläche (31) empfangene erste Licht zu der ersten Emissionsoberfläche (32) zu führen, wobei, in einem horizontalen Querschnitt durch die lichtemittierende Oberfläche der lichtemittierenden Diode für Abblendlicht (24U) gesehen, die hintere Oberfläche (31) beinhaltet:
eine konkave Lichtempfangsoberfläche (310), die vor der lichtemittierenden Diode für Abblendlicht (24U) in einer vorne-hinten-Richtung des Lichtmoduls (20) gelegen ist und einen Abschnitt einer konvexen Bodenfläche (310B), der in einer konvexen Gestalt ausgebildet ist, die zentral in einer rückwärts-Richtung vorspringt, und einen Umfangsflächenabschnitt (310S) beinhaltet, die Lichtempfangsoberfläche (310) ist zum Empfangen des ersten Lichts von der lichtemittierenden Diode für Abblendlicht (24U); und
eine Reflektoroberfläche (311), die einen Abschnitt einer rechten Reflektoroberfläche (311R), der zu der Rechten der Lichtempfangsoberfläche in einer links-rechts-Richtung des Lichtmoduls gelegen ist, der Abschnitt der rechten Reflektoroberfläche (311R) ist zum Reflektieren des durch die Lichtempfangsoberfläche (310) empfangenen ersten Lichts, und einen Abschnitt einer linken Reflektoroberfläche (311L) beinhaltet, der zu der Linken der Lichtempfangsoberfläche (310) in der links-rechts-Richtung des Lichtmoduls (20) gelegen ist, der Abschnitt der linken Reflektoroberfläche (311L) ist zum Reflektieren des ersten Lichts, die erste Emissionsoberfläche (32) vor dem Abschnitt der konvexen Bodenfläche (310B), dem Abschnitt der linken Reflektoroberfläche (311L) und dem Abschnitt der rechten Reflektoroberfläche (311R) gelegen ist, die erste Emissionsoberfläche (32) ist zum Emittieren des durch die Lichtempfangsoberfläche (310) empfangenen ersten Lichts; und
eine äußere Linse (21), die vor der inneren Linse für Abblendlicht (30) gelegen ist eine zweite Emissionsoberfläche (211) beinhaltet, die in einer konvexen Gestalt ausgebildet ist, die zweite Emissionsoberfläche (211) ist zum Empfangen des von der ersten Emissionsoberfläche (32) emittierten ersten Lichts und zum Emittieren des ersten Lichts für Abblendlicht,
die innere Linse (30) weiterhin eine untere Oberfläche (35) beinhaltet, die in dem Lichtführungsabschnitt (33) gelegen ist, die untere Oberfläche (35) verbindet die erste Emissionsoberfläche (32) und die hintere Oberfläche (31), wobei,
in einem horizontalen Querschnitt durch die lichtemittierende Oberfläche der lichtemittierenden Diode für Abblendlicht (24U) gesehen,
die erste Emissionsoberfläche (32) beinhaltet:
einen Abschnitt einer linken ersten Emissionsoberfläche (32L), der an der linken Seite der Mittellinie der äußeren Linse (21) in der links-rechts-Richtung des Lichtmoduls (20) gelegen ist, der Abschnitt der linken ersten Emissionsoberfläche (32L) ist zum Brechen nach rechts und Emittieren des von der Lichtempfangsoberfläche (310) und der Reflektoroberfläche (311) empfangenen ersten Lichts; und
einen Abschnitt einer rechten ersten Emissionsoberfläche (32R), der an der rechten Seite der Mittellinie der äußeren Linse (21) in der links-rechts-Richtung des Lichtmoduls (20) gelegen ist, der Abschnitt der rechten ersten Emissionsoberfläche (32R) ist zum Brechen nach links und Emittieren des von der Lichtempfangsoberfläche (310) und der Reflektoroberfläche (311) empfangenen ersten Lichts, **dadurch gekennzeichnet, dass**,
in einem vertikalen Querschnitt durch die lichtemittierende Oberfläche der lichtemittierenden Diode für Abblendlicht (24U) gesehen, die erste Emissionsoberfläche (32) in einer konkaven Gestalt ausgebildet ist.

2. Das Lichtmodul (20) für den Scheinwerfer (10) des Fahrzeugs nach Anspruch 1, wobei das Lichtmodul (20) eine einzige der lichtemittierenden Diode für Abblendlicht (24U) oder eine Vielzahl der lichtemittierenden Dioden für Abblendlicht (24U) beinhaltet, die in der links-rechts-Richtung des Lichtmoduls (20) angeordnet sind, und
eine Breite in der links-rechts-Richtung des Lichtmoduls (20) einer einzigen oder einer Vielzahl der lichtemittierenden Oberflächen der einzigen oder der Vielzahl von lichtemittierenden Dioden für Abblendlicht (24U) größer ist als eine Breite in einer oben-unten-Richtung des Lichtmoduls (20) der einzigen oder der Vielzahl der lichtemittierenden Oberflächen der einzigen oder der Vielzahl von lichtemittierenden Dioden für Abblendlicht (24U).

3. Das Lichtmodul (20) für den Scheinwerfer (10) des Fahrzeugs nach Anspruch 1 oder 2, wobei,
in einem horizontalen Querschnitt durch die lichtemittierende Oberfläche der lichtemittierenden Diode für Abblendlicht (24U) gesehen,
das Lichtmodul (20) eine Vielzahl der lichtemittierenden Dioden für Abblendlicht (24U) beinhaltet, die in der links-rechts-Richtung des Lichtmoduls (20) angeordnet sind,
die innere Linse für Abblendlicht (30) beinhaltet:
eine Vielzahl der Lichtempfangsoberflächen (310), die in der links-rechts-Richtung des Lichtmoduls (20) angeordnet sind, wobei jede der Lichtempfangsoberflächen (310) vor der jeweiligen lichtemittierenden Diode für Abblendlicht (24U) gelegen ist; und
eine Vielzahl der Reflektoroberflächen (311), die in der links-rechts-Richtung des Lichtmoduls (20) angeordnet sind, wobei jeder der Abschnitte der linken Reflektoroberfläche (311L) in der jeweiligen Reflektoroberfläche (311) zu der Linken der jeweiligen Lichtempfangsoberfläche (310) in der links-rechts-Richtung des Lichtmoduls (20) gelegen ist und jeder der Abschnitte der rechten Reflektoroberfläche (311R) in der jeweiligen Reflektoroberfläche (311) zu der Rechten der jeweiligen Lichtempfangsoberfläche (310) in der links-rechts-Richtung des Lichtmoduls (20) gelegen ist,
wobei die erste Emissionsoberfläche (32) vor der Vielzahl von Lichtempfangsoberflächen (310) und der Vielzahl von Abschnitten der linken Reflektoroberfläche (311L) und der Vielzahl von Abschnitten der rechten Reflektoroberfläche (311R) in der vorne-hinten-Richtung des Lichtmoduls (20) gelegen ist und ist zum Emittieren des durch die Vielzahl von Lichtempfangsoberflächen (310) empfangenen ersten Lichts, und
wobei die äußere Linse (21) zum Empfangen des von der ersten Emissionsoberfläche emittierten ersten Lichts und zum Emittieren des ersten Lichts von der zweiten Emissionsoberfläche (211), die in der konvexen Gestalt ausgebildet ist, ist.

4. Das Lichtmodul (20) für den Scheinwerfer (10) des Fahrzeugs nach Anspruch 3, wobei,
in einem horizontalen Querschnitt durch die lichtemittierende Oberfläche der lichtemittierenden Diode für Abblendlicht (24U) gesehen,
zumindest eine der Vielzahl von lichtemittierenden Dioden für Abblendlicht (24U) auf einer linken Seite einer Mittellinie der äußeren Linse (21) gelegen ist und zumindest eine der Vielzahl von lichtemittierenden Dioden für Abblendlicht (24U) auf einer rechten Seite der Mittellinie der äußeren Linse (21) in der links-rechts-Richtung des Lichtmoduls (20) gelegen ist,
zumindest eine der Vielzahl von Lichtempfangsoberflächen (310) auf der linken Seite der Mittellinie der äußeren Linse (21) gelegen ist und zumindest eine der Vielzahl von Lichtempfangsoberflächen (310) auf der rechten Seite der Mittellinie der äußeren Linse (21) in der links-rechts-Richtung des Lichtmoduls (20) gelegen ist, und
zumindest eine der Vielzahl von Reflektoroberflächen (311) auf der linken Seite der Mittellinie der äußeren Linse (21) gelegen ist und zumindest eine der Vielzahl von Reflektoroberflächen (311) auf der rechten Seite der Mittellinie der äußeren Linse (21) in der links-rechts-Richtung des Lichtmoduls (20) gelegen ist.

5. Das Lichtmodul (20) für den Scheinwerfer (10) des Fahrzeugs nach Anspruch 4, wobei in einem horizontalen Querschnitt durch die lichtemittierende Oberfläche der lichtemittierenden Diode für Abblendlicht (24U) gesehen,
eine Anzahl der lichtemittierenden Dioden für Abblendlicht (24U), die auf der linken Seite der Mittellinie der äußeren Linse (21) gelegen sind, gleich einer Anzahl der lichtemittierenden Dioden für Abblendlicht (24U), die auf der rechten Seite der Mittellinie der äußeren Linse (21) in der links-rechts-Richtung des Lichtmoduls (20) gelegen sind, ist,
eine Anzahl der Lichtempfangsoberflächen (310), die auf der linken Seite der Mittellinie der äußeren Linse (21) gelegen sind, gleich einer Anzahl der Lichtempfangsoberflächen (310), die auf der rechten Seite der Mittellinie der äußeren Linse (21) in der links-rechts-Richtung des Lichtmoduls (20) gelegen sind, ist, und
eine Anzahl der Reflektoroberflächen (311), die auf der linken Seite der Mittellinie der äußeren Linse (21) gelegen sind, gleich einer Anzahl der Reflektoroberflächen (311), die auf der rechten Seite der Mittellinie der äußeren Linse (21) in der links-rechts-Richtung des Lichtmoduls (20) gelegen sind, ist.

6. Das Lichtmodul (20) für den Scheinwerfer (10) des Fahrzeugs nach Anspruch 5, wobei in einem horizontalen Querschnitt durch die lichtemittierende Oberfläche der lichtemittierenden Diode für Abblendlicht (24U) gesehen,
die Vielzahl von lichtemittierenden Dioden für Abblendlicht (24U) in Positionen symmetrisch bezüglich der Mittellinie der äußeren Linse (21) in der links-rechts-Richtung des Lichtmoduls (20) gelegen ist,
die Vielzahl von Lichtempfangsoberflächen (310) in Positionen symmetrisch bezüglich der Mittellinie der äußeren Linse (21) in der links-rechts-Richtung des Lichtmoduls (20) gelegen ist, und
die Vielzahl von Reflektoroberflächen (311) in Positionen symmetrisch bezüglich der Mittellinie der äußeren Linse (21) in der links-rechts-Richtung des Lichtmoduls (20) gelegen ist.

7. Das Lichtmodul (20) für den Scheinwerfer (10) des Fahrzeugs nach irgendeinem von Ansprüchen 1 bis 6, wobei, in einem horizontalen Querschnitt durch die lichtemittierende Oberfläche der lichtemittierenden Diode für Abblendlicht (24U) gesehen, eines von einem vorderen Ende des Abschnitts der linken Reflektoroberfläche (311L) und einem vorderen Ende des Abschnitts der rechten Reflektoroberfläche (311R) der Reflektoroberfläche (311) vor dem anderen in der vorne-hinten-Richtung des Lichtmoduls (20) gelegen ist.

8. Das Lichtmodul (20) für den Scheinwerfer (10) des Fahrzeugs nach irgendeinem von Ansprüchen 1 bis 7, wobei,
in einem horizontalen Querschnitt durch die lichtemittierende Oberfläche der lichtemittierenden Diode für Abblendlicht (24U) gesehen, eine Gestalt des Umfangsflächenabschnitts (310S) der Lichtempfangsoberfläche (310) symmetrisch bezüglich einer Normalen (310N) ist, die eine Mitte des Abschnitts der konvexen Bodenfläche (310B) passiert, und,
in einem vertikalen Querschnitt durch die lichtemittierende Oberfläche der lichtemittierenden Diode für Abblendlicht (24U) gesehen, die Gestalt des Umfangsflächenabschnitts (310S) der Lichtempfangsoberfläche (310) asymmetrisch bezüglich der Normalen (310N) ist, die die Mitte des Abschnitts der konvexen Bodenfläche (310B) passiert.

9. Das Lichtmodul (20) für den Scheinwerfer (10) des Fahrzeugs nach irgendeinem von Ansprüchen 1 bis 8, wobei,
in einem vertikalen Querschnitt durch die lichtemittierende Oberfläche der lichtemittierenden Diode für Abblendlicht (24U) gesehen, eine Mitte des Abschnitts der konvexen Bodenfläche (310B) der Lichtempfangsoberfläche (310) von der Mittellinie der äußeren Linse (21) versetzt ist.

10. Das Lichtmodul (20) für den Scheinwerfer (10) des Fahrzeugs nach irgendeinem von Ansprüchen 1 bis 9, wobei,
in einem vertikalen Querschnitt durch die lichtemittierende Oberfläche der lichtemittierenden Diode für Abblendlicht (24U) gesehen, eine Normale (310N) einer Mitte des Abschnitts der konvexen Bodenfläche (310B) der Lichtempfangsoberfläche (310) bezüglich der Mittellinie der äußeren Linse (21) geneigt ist und, in der vorne-hinten-Richtung des Lichtmoduls (20), ein Punkt vor dem Abschnitt der konvexen Bodenfläche (310B) in der Normalen (310N) unter einem Punkt hinter dem Abschnitt der konvexen Bodenfläche (310B) in der Normalen (310N) gelegen ist.

11. Das Lichtmodul (20) für den Scheinwerfer (10) des Fahrzeugs nach irgendeinem von Ansprüchen 1 bis 10, wobei,
in einem vertikalen Querschnitt durch die lichtemittierende Oberfläche der lichtemittierenden Diode für Abblendlicht (24U) gesehen,
die Reflektoroberfläche (311) beinhaltet:
einen Abschnitt einer oberen Reflektoroberfläche (311U), der über dem Abschnitt der konvexen Bodenfläche (310B) in einer oben-unten-Richtung des Lichtmoduls (20) gelegen ist, der Abschnitt der oberen Reflektoroberfläche (311U) ist zum Reflektieren des durch die Lichtempfangsoberfläche (310) empfangenen ersten Lichts; und
einen Abschnitt einer unteren Reflektoroberfläche (311D), der unter dem Abschnitt der konvexen Bodenfläche (310B) in der oben-unten-Richtung des Lichtmoduls (20) gelegen ist, der Abschnitt der unteren Reflektoroberfläche (311D) ist zum Reflektieren des durch die Lichtempfangsoberfläche (310) empfangenen ersten Lichts, und
ein vorderes Ende des Abschnitts der oberen Reflektoroberfläche (311U) vor einem vorderen Ende des Abschnitts der unteren Reflektoroberfläche (311D) in der vorne-hinten-Richtung des Lichtmoduls (20) gelegen ist.

12. Das Lichtmodul (20) für den Scheinwerfer (10) des Fahrzeugs nach irgendeinem von Ansprüchen 1 bis 11, wobei, in einem horizontalen Querschnitt durch die lichtemittierende Oberfläche der lichtemittierenden Diode für Abblendlicht (24U) gesehen, der Abschnitt der linken ersten Emissionsoberfläche (32L) und der Abschnitt der rechten ersten Emissionsoberfläche (32R) symmetrisch bezüglich der Mittelachse der äußeren Linse (21) gelegen sind.

13. Das Lichtmodul (20) für den Scheinwerfer (10) des Fahrzeugs nach irgendeinem von Ansprüchen 1 bis 12, wobei, in einem vertikalen Querschnitt durch die lichtemittierende Oberfläche der lichtemittierenden Diode für Abblendlicht (24U) gesehen, ein oberes Ende der ersten Emissionsoberfläche (32) vor einem unteren Ende der ersten Emissionsoberfläche (32) in der vorne-hinten-Richtung des Lichtmoduls (20) gelegen ist.

14. Das Lichtmodul (20) für den Scheinwerfer (10) des Fahrzeugs nach irgendeinem von Ansprüchen 11 bis 13, wobei, in einem horizontalen Querschnitt durch die lichtemittierende Oberfläche der lichtemittierenden Diode für Abblendlicht (24U) gesehen, die erste Emissionsoberfläche (32) eine Vielzahl von konvexen Abschnitten (321), die in der links-rechts-Richtung des Lichtmoduls (20) angeordnet sind, beinhaltet.

15. Das Lichtmodul (20) für den Scheinwerfer (10) des Fahrzeugs nach irgendeinem von Ansprüchen 1 bis 14, wobei,
in einem vertikalen Querschnitt durch die lichtemittierende Oberfläche der lichtemittierenden Diode für Abblendlicht (24U) gesehen,
das Lichtmodul (20) weiterhin umfasst:
eine lichtemittierende Diode für Fernlicht (24D) zum Emittieren eines zweiten Lichts in eine vorwärts-Richtung; und
einen Reflektor (27) zum Empfangen des zweiten Lichts von der lichtemittierenden Diode für Fernlicht (24D) und zum Führen des zweiten Lichts über die Mittellinie der äußeren Linse (21) in einer oben-unten-Richtung des Lichtmoduls (20), und
die äußere Linse (21) ist zum Empfangen des durch den Reflektor (27) geführten zweiten Lichts und zum Emittieren des zweiten Lichts als Licht für Fernlicht.

16. Das Lichtmodul (20) für den Scheinwerfer (10) des Fahrzeugs nach Anspruch 15, wobei, in einem vertikalen Querschnitt durch die lichtemittierende Oberfläche der lichtemittierenden Diode für Abblendlicht (24U) gesehen, die lichtemittierende Diode für Fernlicht (24D) hinter der lichtemittierenden Diode für Fernlicht (24U) in der vorne-hinten-Richtung des Lichtmoduls (20) gelegen ist.

17. Ein Scheinwerfer (10) für ein Fahrzeug, umfassend das Lichtmodul (20) nach irgendeinem von Ansprüchen 1 bis 16.

18. Ein Fahrzeug (1), umfassend den Scheinwerfer (10) nach Anspruch 17.

## Revendications

1. Module d'éclairage (20) pour un phare (10) d'un véhicule, le module d'éclairage (20) comprenant:
une diode électroluminescente pour feu de croisement (24U) comprenant une surface d'émission de lumière pour émettre une première lumière dans une direction avant;
une lentille intérieure pour feu de croisement (30) comprenant une surface arrière (31) qui est une surface configurée pour recevoir la première lumière émise par la diode électroluminescente pour feu de croisement (24U), une première surface d'émission (32) et une section de guidage de la lumière (33) qui est configurée pour guider la première lumière reçue par la surface arrière (31) vers la première surface d'émission (32), dans lequel, lorsqu'il est vu en coupe horizontale à travers la surface d'émission de la diode électroluminescente pour feu de croisement (24U),
la surface arrière (31) comprend:
une surface de réception de lumière concave (310) située à l'avant de la diode électroluminescente pour faisceau de croisement (24U) dans une direction avant-arrière du module de lumière (20) et comprenant une section de surface inférieure convexe (310B) formée selon une forme convexe faisant saillie de manière centrale dans une direction arrière et une section de surface circonférentielle (310S), la surface de réception de lumière (310) pour recevoir la première lumière provenant de la diode électroluminescente pour faisceau de croisement (24U); et
une surface réfléchissante (311) comprenant une section droite de surface réfléchissante (311R) située à la droite de la surface de réception de la lumière dans une direction gauche-droite du module d'éclairage, la section droite de surface réfléchissante (311R) pour réfléchir la première lumière reçue par la surface de réception de la lumière (310), et une section gauche de surface réfléchissante (311L) située à la gauche de la surface de réception de la lumière (310) dans la direction gauche-droite du module d'éclairage (20), la section gauche de surface réfléchissante (311L) pour réfléchir la première lumière;
la première surface d'émission (32) est située devant la section de surface inférieure convexe (310B), la section de surface réflectrice gauche (311L) et la section de surface réflectrice droite (311R), la première surface d'émission (32) pour émettre la première lumière reçue par la surface de réception de lumière (310); et
une lentille extérieure (21) située devant la lentille intérieure pour les feux de croisement (30) et comprenant une seconde surface d'émission (211) formée en une forme convexe, la seconde surface d'émission (211) pour recevoir la première lumière émise par la première surface d'émission (32) et à émettre la première lumière pour un faisceau faible,
la lentille intérieure (30) comprend en outre une surface inférieure (35), située dans la section de guide de lumière (33), la surface inférieure (35) relie la première surface d'émission (32) et la surface arrière (31), dans laquelle
en coupe horizontale à travers la surface d'émission de la diode électroluminescente pour feux de croisement (24U),
la première surface d'émission (32) comprend:
une section gauche de première surface d'émission (32L) située sur le côté gauche de la ligne centrale de la lentille extérieure (21) dans la direction gauche-droite du module d'éclairage (20), la section gauche de première surface d'émission (32L) pour réfracter vers la droite et émettre la première lumière reçue de la surface de réception de lumière (310) et de la surface de réflecteur (311); et
une première section de surface d'émission droite (32R) située sur le côté droit de la ligne centrale de la lentille extérieure (21) dans la direction gauche-droite du module d'éclairage (20), la première section de surface d'émission droite (32R) pour réfracter vers la gauche et émettre la première lumière reçue de la surface de réception de lumière (310) et de la surface réfléchissante (311),
**caractérisé en ce que**,
lorsque l'on regarde en coupe verticale à travers la surface d'émission de la diode électroluminescente pour faisceau de croisement (24U) ; la première surface d'émission (32) est formée en une forme concave.

2. Module d'éclairage (20) pour le phare (10) du véhicule selon la revendication 1, dans lequel
le module de lumière (20) comprend une seule des diodes électroluminescentes pour feu de croisement (24U) ou une pluralité des diodes électroluminescentes pour feu de croisement (24U) disposées dans la direction gauche-droite du module de lumière (20), et
une largeur dans la direction gauche-droite du module de lumière (20) d'une seule ou d'une pluralité des surfaces d'émission de lumière de la seule ou de la pluralité de diodes électroluminescentes pour feu de croisement (24U) est supérieure à une largeur dans une direction haut-bas du module de lumière (20) de la seule ou de la pluralité de surfaces d'émission de lumière de la seule ou de la pluralité de diodes électroluminescentes pour feu de croisement (24U).

3. Module d'éclairage (20) pour le phare (10) du véhicule selon les revendications 1 ou 2, dans lequel,
en coupe horizontale à travers la surface d'émission de la diode électroluminescente pour feux de croisement (24U),
le module de lumière (20) comprend une pluralité de diodes électroluminescentes pour feux de croisement (24U) disposées dans la direction gauche-droite du module de lumière (20),
la lentille intérieure pour les feux de croisement (30) comprend:
une pluralité de surfaces de réception de lumière (310) agencées dans la direction gauche-droite du module de lumière (20), chacune des surfaces de réception de lumière (310) étant située devant la diode électroluminescente respective pour faisceau bas (24U); et
une pluralité de surfaces réfléchissantes (311) disposées dans la direction gauche-droite du module de lumière (20), chacune des sections de surface réfléchissante gauche (311L) dans la surface réfléchissante respective (311) étant située à gauche de la surface de réception de lumière respective (310) dans la direction gauche-droite du module de lumière (20) et chacune des sections de surface réfléchissante droite (311R) dans la surface réfléchissante respective (311) étant située à droite de la surface de réception de lumière respective (310) dans la direction gauche-droite du module de lumière (20),
dans lequel la première surface d'émission (32) est située devant la pluralité de surfaces de réception de lumière (310) et la pluralité de sections de surface de réflecteur gauche (311L) et la pluralité de sections de surface de réflecteur droite (311R) dans la direction avant-arrière du module de lumière (20) et doit émettre la première lumière reçue par la pluralité de surfaces de réception de lumière (310), et
dans lequel la lentille extérieure (21) doit recevoir la première lumière émise par la première surface d'émission (32) et émettre la première lumière à partir de la seconde surface d'émission (211) formée dans la forme convexe.

4. Module d'éclairage (20) pour le phare (10) du véhicule selon la revendication 3, dans lequel
en coupe horizontale à travers la surface d'émission de la diode électroluminescente pour feux de croisement (24U),
au moins l'une de la pluralité de diodes électroluminescentes pour feux de croisement (24U) est située sur un côté gauche d'une ligne centrale de la lentille extérieure (21) et au moins l'une de la pluralité de diodes électroluminescentes pour feux de croisement (24U) est située sur un côté droit de la ligne centrale de la lentille extérieure (21) dans la direction gauche-droite du module de lumière (20),
au moins une de la pluralité de surfaces de réception de lumière (310) est située sur le côté gauche de la ligne centrale de la lentille extérieure (21) et au moins une de la pluralité de surfaces de réception de lumière (310) est située sur le côté droit de la ligne centrale de la lentille extérieure (21) dans la direction gauche-droite du module de lumière (20), et
au moins une de la pluralité de surfaces de réflecteur (311) est située sur le côté gauche de la ligne centrale de la lentille extérieure (21) et au moins une de la pluralité de surfaces de réflecteur (311) est située sur le côté droit de la ligne centrale de la lentille extérieure (21) dans la direction gauche-droite du module d'éclairage (20).

5. Module d'éclairage (20) pour le phare (10) du véhicule selon la revendication 4, **caractérisé en ce que**
en coupe horizontale à travers la surface d'émission de la diode électroluminescente pour feux de croisement (24U),
un nombre de diodes électroluminescentes pour faisceau de croisement (24U) situé sur le côté gauche de la ligne centrale de la lentille extérieure (21) est égal à un nombre de diodes électroluminescentes pour faisceau de croisement (24U) situé sur le côté droit de la ligne centrale de la lentille extérieure (21) dans la direction gauche-droite du module de lumière (20),
un nombre des surfaces de réception de lumière (310) situées sur le côté gauche de la ligne centrale de la lentille extérieure (21) est égal à un nombre des surfaces de réception de lumière (310) situées sur le côté droit de la ligne centrale de la lentille extérieure (21) dans la direction gauche-droite du module de lumière (20), et
un nombre de surfaces de réflecteur (311) situées sur le côté gauche de la ligne centrale de la lentille extérieure (21) est égal à un nombre de surfaces de réflecteur (311) situées sur le côté droit de la ligne centrale de la lentille extérieure (21) dans la direction gauche-droite du module d'éclairage (21).

6. Module d'éclairage (20) pour le phare (10) du véhicule selon la revendication 5, dans lequel
en coupe horizontale à travers la surface d'émission de la diode électroluminescente pour feux de croisement (24U),
la pluralité de diodes électroluminescentes pour faisceau de croisement (24U) est située dans des positions symétriques par rapport à la ligne centrale de la lentille extérieure (21) dans la direction gauche-droite du module de lumière (20),
la pluralité de surfaces de réception de lumière (310) est située dans des positions symétriques par rapport à la ligne centrale de la lentille extérieure (21) dans la direction gauche-droite du module de lumière (20), et
la pluralité de surfaces de réflecteur (311) est située dans des positions symétriques par rapport à la ligne centrale de la lentille extérieure (21) dans la direction gauche-droite du module d'éclairage (20).

7. Module d'éclairage (20) pour le phare (10) du véhicule selon l'une quelconque des revendications 1 à 6, dans lequel, en coupe horizontale à travers la surface d'émission de lumière de la diode électroluminescente pour feux de croisement (24U), l'une d'une extrémité avant de la section de surface de réflecteur gauche (311L) et d'une extrémité avant de la section de surface de réflecteur droite (311R) de la surface de réflecteur (311) est située devant l'autre dans la direction avant-arrière du module d'éclairage (20).

8. Module d'éclairage (20) pour le phare (10) du véhicule selon l'une quelconque des revendications 1 à 7, dans lequel
en coupe horizontale à travers la surface d'émission de lumière de la diode électroluminescente pour faisceau de croisement (24U), une forme de la section de surface circonférentielle (310S) de la surface de réception de lumière (310) est symétrique par rapport à une normale (310N) passant par un centre de la section de surface inférieure convexe (310B), et
en coupe verticale à travers la surface d'émission de lumière de la diode électroluminescente pour faisceau de croisement (24U), la forme de la section de surface circonférentielle (310S) de la surface de réception de lumière (310) est asymétrique par rapport à la normale (310N) passant par le centre de la section de surface inférieure convexe (310B).

9. Module d'éclairage (20) pour le phare (10) du véhicule selon l'une quelconque des revendications 1 à 8, dans lequel, en coupe verticale à travers la surface d'émission de lumière de la diode d'émission de lumière pour feu de croisement (24U), un centre de la section de surface inférieure convexe (310B) de la surface de réception de lumière (310) est décalé de la ligne centrale de la lentille extérieure (21).

10. Module d'éclairage (20) pour le phare (10) du véhicule selon l'une quelconque des revendications 1 à 9, dans lequel, en coupe verticale à travers la surface d'émission de lumière de la diode d'émission de lumière pour faisceau de croisement (24U), une normale (310N) d'un centre de la section de surface inférieure convexe (310B) de la surface de réception de lumière (310) est inclinée par rapport à la ligne centrale de la lentille extérieure (21) et, dans la direction avant-arrière du module d'éclairage (20), un point devant la partie inférieure convexe (310B) dans la normale (310N) se trouve en dessous d'un point derrière la partie inférieure convexe (310B) dans la normale (310N).

11. Module d'éclairage (20) pour le phare (10) du véhicule selon l'une quelconque des revendications 1 à 10, dans lequel
en coupe verticale à travers la surface d'émission de la diode électroluminescente pour feux de croisement (24U),
la surface du réflecteur (311) comprend:
une section de surface réflectrice supérieure (311U) située au-dessus de la section de surface inférieure convexe (310B) dans une direction haut-bas du module d'éclairage (20), la section de surface réflectrice supérieure (311U) pour réfléchir la première lumière reçue par la surface réceptrice de lumière (310); et
une section de surface réflectrice inférieure (311D) située sous la section de surface inférieure convexe (310B) dans la direction haut-bas du module d'éclairage (20), la section de surface réflectrice inférieure (311D) pour réfléchir la première lumière reçue par la surface réceptrice de lumière (310), et
une extrémité avant de la section de surface de réflecteur supérieure (311U) est située devant une extrémité avant de la section de surface de réflecteur inférieure (311D) dans la direction avant-arrière du module d'éclairage (20).

12. Module d'éclairage (20) pour le phare (10) du véhicule selon l'une quelconque des revendications 1 à 11, dans lequel, en coupe horizontale à travers la surface d'émission de lumière de la diode d'émission de lumière pour feux de croisement (24U), la première section de surface d'émission gauche (32L) et la première section de surface d'émission droite (32R) sont situées symétriquement par rapport à l'axe central de la lentille extérieure (21).

13. Module d'éclairage (20) pour le phare (10) du véhicule selon l'une quelconque des revendications 1 à 12, dans lequel, en coupe verticale à travers la surface d'émission de lumière de la diode d'émission de lumière pour feu de croisement (24U), une extrémité supérieure de la première surface d'émission (32) est située
devant une extrémité inférieure de la première surface d'émission (32) dans la direction avant-arrière du module d'éclairage (20).

14. Module d'éclairage (20) pour le phare (10) du véhicule selon l'une quelconque des revendications 11 à 13, dans lequel, en coupe horizontale à travers la surface d'émission de lumière de la diode d'émission de lumière pour feux de croisement (24U), la première surface d'émission (32) comprend une pluralité de sections convexes (321) disposées dans la direction gauche-droite du module d'éclairage (20).

15. Module d'éclairage (20) pour le phare (10) du véhicule selon l'une quelconque des revendications 1 à 14, dans lequel
en coupe verticale à travers la surface d'émission de la diode électroluminescente pour feux de croisement (24U),
le module de lumière (20) comprend en outre:
une diode électroluminescente pour faisceau de route (24D) pour émettre une seconde lumière dans une direction avant; et
un réflecteur (27) pour recevoir la seconde lumière provenant de la diode électroluminescente pour faisceau élevé (24D) et pour guider la seconde lumière au-dessus de la ligne centrale de la lentille extérieure (21) dans une direction haut-bas du module de lumière (20), et
la lentille extérieure (21) pour recevoir la seconde lumière guidée par le réflecteur (27) et pour émettre la seconde lumière en tant que lumière pour faisceau de route.

16. Module d'éclairage (20) pour le phare (10) du véhicule selon la revendication 15, dans lequel, en coupe verticale à travers la surface d'émission de lumière de la diode électroluminescente pour feux de croisement (24U), la diode électroluminescente pour feux de route (24D) est située derrière la diode électroluminescente pour feux de croisement (24U) dans la direction avant-arrière du module d'éclairage (20).

17. Phare (10) pour un véhicule comprenant le module d'éclairage (20) selon l'une quelconque des revendications 1 à 16.

18. Véhicule (1) comprenant le phare (10) selon la revendication 17.
